# EUROPÄISCHE PATENTSCHRIFT

(11) **EP 3 317 605 B1**
(45) Veröffentlichungstag und Bekanntmachung des Hinweises auf die Patenterteilung: **24.04.2019**
(21) Anmeldenummer: 16723080.4
(22) Anmeldetag: 12.05.2016
(51) Int. Cl.: F41H 5/04

(54) **SCHUTZMATERIAL MIT SPLITTER-, STICH-, SCHNITT-, SCHUSS- UND/ODER STOSSSCHUTZFUNKTION**
PROTECTIVE MATERIAL HAVING A PROTECTION FUNCTION AGAINST FRAGMENTS, STABBING, CUTTING, FIREARMS AND/OR SHOCKS
MATÉRIAU PROTECTEUR À FONCTION DE PROTECTION CONTRE LES ÉCLATS, LES PERFORATIONS, LES ENTAILLES, LES TIRS ET/OU LES CHOCS

(30) Priorität: 03.07.2015 DE 102015008501; 10.07.2015 DE 102015008810
(43) Veröffentlichungstag der Anmeldung: 09.05.2018
(73) Patentinhaber: Blücher GmbH, 40699 Erkrath (DE)
(72) Erfinder: FREIER, Katrin, 41065 Mönchengladbach (DE); BOEHRINGER, Bertram, 42115 Wuppertal (DE)
(74) Vertreter: Von Rohr Patentanwälte Partnerschaft mbB
(86) Internationale Anmeldenummer: PCT/EP2016/060654
(87) Internationale Veröffentlichungsnummer: WO 2017/005397

(56) Entgegenhaltungen:
- EP-A1- 0 310 199
- EP-A1- 2 199 728
- WO-A1-03/053676
- WO-A1-2014/060094
- US-A1- 2008 064 280
- US-A1- 2013 213 208

## Beschreibung

Die vorliegende Erfindung betrifft das technische Gebiet von textilen Schutzmaterialien, welche insbesondere für den militärischen Einsatz konzipiert sind und welche einen Schutz von insbesondere militärischen Gegenständen gegenüber einwirkenden (Explosions-)Kräften bzw. gegenüber ballistischen Gegenständen bzw. Geschossen, insbesondere in Form von Splittern oder dergleichen, aber auch gegenüber Einwirkungen von Hieb- und Stichwaffen sowie Stoßwaffen bereitstellen bzw. gewährleisten.

Insbesondere wird durch die vorliegende Erfindung ein textiles ballistisches Schutzmaterial mit Splitter-, Stich-, Schnitt-, Schuss- und/oder Stoßschutzfunktion bereitgestellt, wobei das erfindungsgemäße Schutzmaterial zum Schutz bzw. zur Abdeckung oder Bedeckung von Gegenständen, insbesondere militärischen Gegenständen, eingesetzt wird.

Gleichermaßen betrifft die vorliegende Erfindung die Verwendung des textilen ballistischen Schutzmaterials nach der Erfindung zur Bereitstellung bzw. zur Erhöhung eines Splitter-, Stich-, Schnitt-, Schuss- bzw. Stoßschutzes von Gegenständen bzw. zur Ausrüstung von Gegenständen mit einem Splitter-, Stich-, Schnitt-, Schuss- und/oder Stoßschutz.

Gleichermaßen betrifft die vorliegende Erfindung ein Verfahren zur Bereitstellung bzw. Erhöhung eines Splitter-, Stich-, Schnitt-, Schuss- und/oder Stoßschutzes von mindestens einem insbesondere militärischen Gegenstand bzw. zur Ausrüstung des zugrundeliegenden Gegenstands mit den zuvor angeführten Schutzeigenschaften.

Darüber hinaus betrifft die vorliegende Erfindung auch eine Schutzmaterialeinheit als solche, welche mindestens einen mit dem Schutzmaterial nach der Erfindung ausgerüsteten bzw. hiermit zumindest teilweise bedeckten Gegenstand umfasst. Die Einwirkung von Sprengvorrichtungen, welche zur explosionsartigen Freisetzung von Splittern führen, sowie die Einwirkung von ballistischen Objekten, wie sie beispielsweise von Schusswaffen oder dergleichen stammen, stellen eine große Gefahr bzw. einen der Hauptrisikofaktoren in militärischen Kampfgebieten sowie in terroristisch geprägten Krisen- bzw. Unruhegebieten dar, zumal splitterfreisetzende Sprengvorrichtungen hinsichtlich ihrer Verbreitung schwer zu kontrollieren und ihre Herstellung mitunter relativ einfach ist, so dass auch nicht militärische Personen mit Gewaltpotential, wie Terroristen oder dergleichen, derartige Sprengvorrichtungen herstellen und einsetzen können. Die insbesondere explosionsartige Freisetzung von Splittern bzw. ballistischen Objekten führt dabei - neben der großen Gefährdung von im militärischen Bereich sowie im Bereich der terroristischen Gefahrenabwehr eingesetzten Personen, wie Soldaten militärischer Verbände, Grenzschützer, Polizisten, Sicherheitspersonal oder dergleichen - auch zu einer akuten oder zumindest latenten Gefahr der Beschädigung von im Rahmen des militärischen bzw. des der terroristischen Gefahrenabwehr dienenden Einsatzes verwendeten Gegenständen bzw. Objekten, wie militärischen Ausrüstungsgegenständen, Fahrzeugen, Waffen, militärischen Gerätschaften oder dergleichen, also auch von Gegenständen, insbesondere in Planungs- und Koordinatorstellen oder Unterkünften, welche gleichermaßen im Zusammenhang mit dem Einsatz stehen.

Aufgrund der Einwirkung von Splittern bzw. ballistischer Objekte kann es beispielsweise zu einer Zerstörung der Gerätschaften bzw. zu einer Durchdringung der Außenwandung des betroffenen Gegenstands, einhergehend mit einer weiterführenden Zerstörung des Gegenstands als solchen, kommen. Darüber hinaus können beispielsweise in Transportfahrzeugen oder dergleichen befindliche Personen durch penetrierende Splitter bzw. Objekte mitunter nachhaltig verletzt werden.

In diesem Zusammenhang ist eine akute Bedrohung von Gegenständen bzw. Objekten, wie sie im militärischen Einsatz bzw. zur Terrorismusbekämpfung eingesetzt werden, in sogenannten unkonventionellen Sprengvorrichtungen zu sehen, welche synonym auch als IEDs ("*Improvised Explosive Devices*") bezeichnet werden. Derartige Sprengvorrichtungen haben sich zu einem subtilen Werkzeug der Kriegsführung bzw. von terroristischen Aktionen mit hohem Zerstörungspotential entwickelt.

Die von einer IED-Explosion freigesetzten bzw. hervorgerufenen Primär- und Sekundärfragmente breiten sich durch die starke Beschleunigung mit hoher Geschwindigkeit im Raum aus, was zu einem entsprechend hohen Zerstörungspotential führt, da die zugrundeliegenden Splitter bzw. Fragmente beispielsweise die Außenhaut, Wände und Hüllen von raumgebenden Objekten bzw. der in Rede stehenden Gegenstände durchdringen und somit auch auf das Innere der Gegenstände bzw. Objekte einwirken können, gegebenenfalls einhergehend mit einer weiterführenden Verletzung von sich in einem Objekt befindenden Personen.

Unkonventionelle Sprengvorrichtungen sind auch von daher mit einem hohen Gefahrenpotential verbunden, dass diese oftmals ohne großen technischen Aufwand hergestellt und in diesem Zusammenhang auch in Material, Größe sowie Optik variieren können, was deren Lokalisierung und Identifizierung erschwert. Zudem entwickeln unkonventionelle Sprengvorrichtungen oftmals eine große Zerstörungskraft, insbesondere infolge der explosionsartigen Freisetzung von Primär- und Sekundärsplittern unter Entstehung einer großen Druckwelle einerseits sowie von Feuer und Hitze andererseits.

Im Allgemeinen besteht die Funktionsweise von unkonventionellen Sprengvorrichtungen darin, dass die Sprengvorrichtung durch Zündung von Explosivstoffen zum Bersten gebracht wird, einhergehend mit der explosionsartigen Freisetzung von Primärsplittern, welche sich mit der gleichzeitig entstehenden Druckwelle unter Hochgeschwindigkeit vom Explosionsort ausgehend ausbreiten. Zudem können die Druckwelle und die entstehenden Primärsplitter zur nachfolgenden Freisetzung von Sekundärsplittern führen, und zwar oftmals in Form von (Kleinst-)Partikeln, wie Schmutz, Staub und Sand, sowie Fragmenten zerstörter Objekte aus der unmittelbaren bzw. mittelbaren Umgebung des Explosionsortes der Sprengvorrichtung. Dabei können die Sekundärsplitter beispielsweise auch von durch die Explosion zerstörten Ausrüstungsgegenständen (wie Fahrzeuginterieur) oder dergleichen selbst stammen, was zu einer weiterführenden Verletzung von beispielsweise im Fahrzeug befindlichen Personen führen kann.

Aufgrund der Funktionsweise unkonventioneller Sprengvorrichtungen mit der explosionsartigen Freisetzung von Splitter(-geschossen) können bei derartigen Explosionen auch bei zunächst nur indirekt betroffenen Personen mitunter großflächige und schwerwiegende Verletzungen entstehen, welche insbesondere infolge der Penetration von Primär- und Sekundärsplittern in den Körper, aber auch infolge der (Explosions-)Druckwelle bzw. der Feuer- und Hitzeeinwirkung resultieren, insbesondere auch infolge der Zerstörung des der Explosion ausgesetzten Gegenstands bzw. Objektes, wie beispielsweise einem Fahrzeug oder dergleichen.

Neben der mit den in Rede stehenden IED-Explosionen einhergehenden Personenschäden und den damit in Verbindung stehenden Verlusten stellt die Zerstörung von Gegenständen bzw. Objekten, welche im militärischen Einsatz bzw. zur Terrorismusabwehr eingesetzt werden, ein großes Problem dar, da aufgrund des damit einhergehenden Materialverlustes die Einsatzstärke bzw. -kraft nachhaltig vermindert werden kann.

Bei den in Rede stehenden Gegenständen bzw. Objekten kann es sich beispielsweise, wie nachfolgend noch im Detail ausgeführt, im Allgemeinen um technische, mechanische oder elektronische Gegenstände und insbesondere um militärische Fahrzeuge, Maschinen, Waffen, Munition, Ersatzteile, Elektronikgegenstände, Zubehörgegenstände, Anlagen, Einrichtungen, Ausrüstungen oder dergleichen handeln. Hierbei handelt es sich mitunter um hochtechnische und entsprechend empfindliche Gerätschaften, so dass auch von daher ein hoher Bedarf besteht, entsprechende Gegenstände vor Explosionseinwirkung, insbesondere der vorgenannten Art, zu schützen.

In diesem Zusammenhang geht gleichermaßen eine hohe Gefahr auch von solchen Explosionen aus, welche durch Zündung explosiver Stoffe in einem zugrundeliegenden Raum eines Gegenstands bzw. Objektes ausgehen, wie es beispielsweise bei Fahrzeugbomben oder dergleichen der Fall ist, da im Fall einer Zündung sich die resultierenden Explosionskräfte von dem Gegenstand bzw. Objekt ausgehend nach außen ausbreiten und die damit einhergehende Splitterfreisetzung ungehindert auf die Umgebung des Explosionsobjektes einwirken kann, was zu entsprechenden, mitunter nachhaltigen Zerstörungen führen kann, und dies auch einhergehend mit Personenschäden.

Eine weiterführende Gefährdung von insbesondere im militärischen Einsatz bzw. im Rahmen der Terrorismusabwehr eingesetzten Gegenständen bzw. Objekten geht - neben den zuvor angeführten explosionsartig freigesetzten Splittern bzw. ballistischen Objekten - auch von herbeigeführten Stich-, Schnitt- bzw. Stoßeinwirkungen aus, wie sie beispielsweise durch den Einsatz von Hieb- bzw. Stichwaffen, wie Messern oder von Stoßwaffen, wie entsprechenden (Schlag-)Waffen, hervorgerufen werden können. Auch hierdurch kann ein entsprechender Gegenstand nachhaltig zerstört werden, und infolge einer hieraus resultierenden Penetration kann es gleichermaßen zu einer Verletzung von Personen kommen, welche sich in dem betroffenen Gegenstand bzw. Objekt, wie beispielsweise einem Fahrzeug oder dergleichen, befinden.

Die obigen Ausführungen zeigen insgesamt, dass im Stand der Technik ein hoher Bedarf besteht, ein effektives Schutzsystem in Form eines Schutzmaterials mit Schutzwirkung gegenüber durch Explosion bzw. Detonation freigesetzten Splittern bzw. mit einem weiterführenden Schutz gegenüber Stich-, Schnitt- sowie Stoßeinwirkung bereitzustellen, welches bei guter Handhabbarkeit und flexiblen Anwendungseigenschaften einen großflächigen sowie individuell anpassbaren Schutz von entsprechenden Gegenständen bzw. Objekten gewährleistet, wie sie beispielsweise im Rahmen eines militärischen Einsatzes bzw. in der Terrorismusabwehr eingesetzt werden.

Die im Stand der Technik bekannten Schutzsysteme erfüllen dabei jedoch nicht die hohen Anforderungen an derartige Materialien, und zwar weder was deren Schutzfunktion als solche noch deren Handhabbarkeit, individuelle Anpassbarkeit an den zu schützenden Gegenstand sowie deren Dauerhaftigkeit anbelangt.

Die im Stand der Technik bekannten Schutzvorrichtungen bzw. -systeme weisen mitunter zudem den Nachteil auf, dass diese starre bzw. nicht flexible Strukturen aufweisen, was deren Transportfähigkeit sowie individuelle Anpassbarkeit an den zu schützenden Gegenstand nachhaltig verschlechtert. Zudem sind solche Systeme nicht ohne Weiteres faltbar, so dass eine Verstauung bzw. Lagerung des Materials mitunter nicht optimal umgesetzt werden kann.

Die EP 1 229 298 A1 betrifft ein Schutzelement in Form eines deckenartigen Aufbaus mit festen Fasern, in dem Hohlräume bzw. Kammern ausgebildet sind, die mit wenigstens einem Hohlkörper gefüllt sind. In Bezug auf die Fasern wird maßgeblich auf den Einsatz von Aramidfasern fokussiert.

Darüber hinaus betrifft die US 2008/064280 A1 ein flexibles Kompositmaterial, welches eine verbesserte Flexibilität und ballistische Schutzeigenschaften aufweisen soll, wobei das Kompositmaterial eine Mehrzahl an Lagen in Form von Vliesstoffen ("*non-woven fibrous layers*") aufweist, welche wiederum definierte Verbunde aus hochfesten Fasern auf Basis eines Polyalphaolefins umfassen.

Weiterhin betrifft die EP 2 199 728 A1 ein ballistisches Mehrschichtmaterial, welches zumindest eine textile Grundschicht sowie wenigstens eine auf einer Seite mittels eines Klebers auflaminierte Folie umfasst, wobei der Kleber insbesondere nur in Teilbereichen, insbesondere punkt- bzw. linienrasterförmig, vorgesehen ist. Zudem betrifft die EP 0 310 199 A1 ein kugelsicheres Gewebe, welches auf Basis von Filamenten oder Garnen mit hoher Festigkeit und hohen Modulwerten in Form von Polymeren mit ultrahohem Molekulargewicht gebildet wird, wobei die Kettfilamente bzw. -garne des Gewebes aus zu den Polymeren der Schussfilamente bzw. -garne andersartigen Polymeren bestehen sollen.

Weiterhin betrifft die WO 2014/060094 A1 Unterwäsche mit einer ballistischen Ausrüstung, wobei die Grundfläche der Unterwäsche aus einer das Eindringen von Splittern hemmenden Maschenware aus UHMW-PE und wenigstens einem hiervor abweichenden weiteren Textilmaterial zusammengesetzt ist, wobei die Maschenware aus UHMW-PE in einer Zone der Grundfläche angeordnet ist.

Weiterhin betrifft die US 2013/213208 A1 einen Kompositaufbau mit Widerstandsfähigkeit gegenüber dem Eindringen von Projektilen, wobei der Kompositaufbau eine Vielzahl von Schichten aus ballistischen Fasern und eine Vielzahl verschiedener Filme aufweist, welche angrenzend zu den Schichten aus ballistischen Fasern angeordnet sind und wobei jede Schicht der Vielzahl an verschiedenen Schichten ein thermoplastisches Polymer und einen sehr speziellen Dehnungssstärkeindex aufweisen soll.

Zudem betrifft die auf die WO 03/053676 A1 einen Gegenstand mit Stichfestigkeit und Schutzfunktion gegenüber dem Eindringen ballistischer Projektile, wobei der Gegenstand eine Mehrzahl erster Textilschichten auf Basis von Fasern und eine Mehrzahl zweiter Textilschichten auf Basis von Fasern aufweist, wobei die zweiten Schichten mit einer entsprechenden Polymermatrix, welche ein wärmehärtendes Harz, ein thermoplastisches Harz oder deren Mischungen umfasst, umgeben bzw. imprägniert sind, und eine Mehrzahl dritter Textilschichten auf Basis von Fasern aufweist, wobei die Fasern der ersten, zweiten und dritten Mehrzahl an Schichten eine spezielle Festigkeit aufweisen und wobei die erste, zweite und dritte Mehrzahl an Schichten insgesamt eine spezielle Flächendichte aufweisen sollen.

Die US 2003/228815 A1 betrifft bidirektionale und multiaxiale Textilstoffe und Verbundtextilstoffe. Dabei werden insbesondere bidirektionale Textilmaterialien bereitgestellt.

Was den Stand der Technik in diesem Zusammenhang weiterhin anbelangt, so wird zur Bereitstellung einer gewissen Schutzfunktion gegenüber der Einwirkung von explosionsartig freigesetzten Körpern bzw. zur Gewährleistung einer gewissen Stich- bzw. Stoßschutzfunktion beispielsweise auch auf den Einsatz von Materialien zur Ausbildung von Strukturen auf Basis von Para-Aramid (synonym auch als para-Aramid, Paraaramid bzw. Poly(p-phenylenterephthalamid) (PPTA) bezeichnet) abgestellt. Derartige Systeme auf Basis von Para-Aramid weisen zwar eine gewisse Festigkeit, Schlagzähigkeit sowie Bruchdehnung und damit grundsätzlich eine Eignung als Splitterschutzmaterial auf, jedoch ist ein zentraler Nachteil von Para-Aramiden darin zu sehen, dass diese weder UV-stabil noch feuchtigkeitsstabil sind, so dass entsprechende Materialien auf Basis von Para-Aramiden bei Exposition gegenüber UV-Strahlung bzw. Feuchtigkeit, wie Regen- bzw. Waschwasser oder dergleichen, ihre Festigkeitseigenschaften und damit ihre Schutzfunktion verlieren. Weiterhin weisen Fasern bzw. Garne bzw. Zwirne auf Basis von Para-Aramid quer zur Längsachse eine nur geringe Bruchfestigkeit auf, was insbesondere im Hinblick auf die Verarbeitung dieser Materialien zu entsprechenden textilen Flächenmaterialien nachteilig ist, da bei der Krümmung ein Garn- bzw. Faserbruch auftreten kann. Um diesen Nachteil zu kompensieren, können Para-Aramide zwar grundsätzlich in Form eines Stapelfasergarns eingesetzt werden, jedoch weisen derartige Garne zahlreiche Unterbrechungen in der Faserstruktur auf, was der Stabilität und damit der ballistischen Widerstandsfähigkeit des resultierenden textilen Flächenmaterials abträglich ist. Zudem ist die Abriebfestigkeit reduziert, was gleichermaßen auch im Hinblick auf deren Dauerhaftigkeit bzw. Beständigkeit nachteilig ist.

Angesichts der Nachteile des Standes der Technik besteht nach wie vor ein hoher Bedarf, die zugrundeliegenden Gegenstände bzw. Objekte nachhaltig und effizient vor Splitterexposition und dergleichen zu schützen, da die zugrundeliegenden Gegenstände, wie militärische Ausrüstungsgegenstände sowie militärisches Material, im Allgemeinen von sich aus nur unzureichend mit einer derartigen Schutzfunktion ausgestattet sind. Hierbei ist auch beachtlich, dass die zu schützenden Gegenstände oftmals hochgradig komplex und dementsprechend gegenüber mechanischen bzw. physikalischen Einflüssen empfindlich sind, wobei die zugrundeliegenden Gegenstände oftmals auch mit hohen Anschaffungskosten einhergehen und zudem eine hohe Funktionssicherheit im Anwendungsfall (z. B. Kampfeinsatz bzw. terroristische Gefahrenabwehr oder dergleichen) zur Gewährleistung eines Gesamterfolges erforderlich ist, und zwar auch im Hinblick auf die Gewährleistung der Sicherheit des zugrundeliegenden Einsatzpersonals.

Insgesamt besteht daher ein großer Bedarf, ein spezielles Schutzmaterial bereitzustellen, welches bei gleichzeitig hoher Schutzfunktion gegenüber durch Detonation bzw. Explosion freigesetzten Splittern auch einen darüber hinausgehenden Schutz gegenüber Stich-, Schnitt- und Stoßeinwirkung aufweist, wobei das Schutzmaterial gut transportierbar und leicht handhabbar sein soll und zudem in Bezug auf eine Vielzahl von zu schützenden Gegenständen unterschiedlichster Art sozusagen universell einsetzbar sein soll, wobei zudem eine im Hinblick auf die zugrundeliegende Gefahrensituation individuell anpassbare bzw. adaptive Schutzfunktion möglich sein soll.

Vor diesem Hintergrund liegt daher der vorliegenden Erfindung die Aufgabe zugrunde, ein effizientes Konzept zur Bereitstellung eines Schutzmaterials zur Verfügung zu stellen, wobei die zuvor geschilderten Nachteile des Standes der Technik zumindest weitgehend vermieden oder aber wenigstens abgeschwächt werden sollen.

Insbesondere ist eine Aufgabe der vorliegenden Erfindung darin zu sehen, ein Schutzmaterial bereitzustellen, welches über eine im Vergleich zum Stand der Technik verbesserte Schutzfunktion, insbesondere ballistische Schutzfunktion, insbesondere gegenüber durch Detonation bzw. Explosion freigesetzten Splittern bzw. gegenüber ballistischen Körpern bzw. Objekten im Allgemeinen aufweist. Dabei soll das erfindungsgemäß bereitgestellte Schutzmaterial gleichzeitig auch eine hohe Schutzfunktion gegenüber der Penetrationseinwirkung insbesondere von Hieb- und Stich- bzw. Stoßwaffen, wie Messern, Äxten oder dergleichen, aufweisen, so dass erfindungsgemäß auch ein solches Schutzmaterial bereitgestellt werden soll, welches darüber hinaus über eine hohe Stich-, Schnitt- und Stoßschutzfunktion verfügt.

Zudem soll das erfindungsgemäße Schutzmaterial gleichzeitig eine hohe Anpassbarkeit in Bezug auf die Formgebung des zu schützenden Gegenstands aufweisen, wobei das Schutzmaterial auch über eine hohe Beständigkeit, insbesondere gegenüber Feuchtigkeit und UV-Strahlung, verfügen soll, so dass die Schutzfunktion auch über große Zeiträume gewährleistet ist.

Insbesondere soll das Schutzmaterial auch eine gute Handhabbarkeit aufweisen, und zwar sowohl was die Anwendungs- bzw. Einsatzeigenschaften als auch die Aufbewahrungs- bzw. Transporteigenschaften des Materials anbelangt.

Insbesondere soll insgesamt ein Schutzmaterial bereitgestellt werden, welches zudem individuell anpassbar bzw. konfigurierbar ist und bei welchem die Schutzfunktion individuell angepasst bzw. maßgeschneidert werden kann. In diesem Zusammenhang soll erfindungsgemäß auch eine schnelle Konfiguration bzw. Anpassbarkeit der Schutzfunktion beispielsweise unter Einsatzbedingungen gewährleistet werden.

Gleichermaßen besteht eine wiederum weitere Aufgabe der vorliegenden Erfindung darin, ein entsprechendes Schutzmaterial bereitzustellen, bei welchem der zugrundeliegende Schutz insbesondere im Hinblick auf speziell zu schützende Abschnitte bzw. Bereiche des zu schützenden Gegenstands bzw. Objekts individuell angepasst werden kann, und zwar auch im Hinblick auf das zugrundeliegende Gefahrenpotential, aber auch im Hinblick auf die Geometrie und/oder Dimension des zu schützenden Objekts bzw. Gegenstands.

Somit soll erfindungsgemäß ein solches Schutzmaterial bereitgestellt werden, auf dessen Basis die Auswirkungen von beispielsweise im Fall eines militärischen oder terroristischen Angriffs eingesetzten bzw. freigesetzten ballistisch wirkenden Objekte, penetrierenden Objekten oder aber einer Zündung von Explosivstoffen in einem Raum auf zu schützende Gegenstände zumindest abgeschwächt bzw. verringert werden, so dass insgesamt ein erhöhter Schutz bereitgestellt wird.

Zur Lösung der zuvor geschilderten Aufgabe schlägt die vorliegende Erfindung somit - gemäß einem **ersten** Aspekt der vorliegenden Erfindung - ein textiles ballistisches Schutzmaterial mit Splitter-, Schnitt-, Stich-, Schuss- und/oder Stoßschutzfunktion zum Schutz bzw. zur Abdeckung oder Bedeckung und/oder zur Ankleidung von Gegenständen bzw. Objekten, gemäß Patentanspruch 1 vor; jeweils weitere vorteilhafte Weiterbildungen und Ausgestaltungen dieses Erfindungsaspekts sind Gegenstand der entsprechenden das Schutzmaterial betreffenden Unteransprüche.

Wiederum weiterer Gegenstand der vorliegenden Erfindung - gemäß einem **zweiten** Aspekt der vorliegenden Erfindung - ist die Verwendung mindestens eines textilen ballistischen Schutzmaterials zur Bereitstellung bzw. Erhöhung eines Splitter-, Stich-, Schnitt-, Schuss- und/oder Stoßschutzes von Gegenständen bzw. Objekten zur Ausrüstung von Gegenständen bzw. Objekten mit den zuvor angeführten Schutzeigenschaften gemäß dem diesbezüglichen unabhängigen Verwendungsanspruch; jeweils weitere vorteilhafte Weiterbildungen und Ausgestaltungen dieses Erfindungsaspekts sind Gegenstand der entsprechenden, die erfindungsgemäße Verwendung betreffenden Unteransprüche.

Weiterhin ist Gegenstand der vorliegenden Erfindung - gemäß einem **dritten** Aspekt der vorliegenden Erfindung - ein Verfahren zur Bereitstellung bzw. Erhöhung eines Splitter-, Stich-, Schnitt-, Schuss- bzw. Stoßschutzes von mindestens einem Gegenstand bzw. Objekts bzw. zur Ausrüstung mindestens eines Gegenstands bzw. Objekts mit einem entsprechenden Schutz gemäß dem diesbezüglichen unabhängigen Verfahrensanspruch.

Schließlich ist weiterer Gegenstand der vorliegenden Erfindung - gemäß einem **vierten** Aspekt der vorliegenden Erfindung - eine Schutzmaterialeinheit, welche mindestens ein Schutzmaterial nach der Erfindung sowie einen damit ausgerüsteten bzw. zumindest teilweise bedeckten bzw. ausgekleideten Gegenstand umfasst, gemäß dem die Schutzmaterialeinheit betreffenden unabhängigen Patentanspruch.

Es versteht sich von selbst, dass bei der nachfolgenden Beschreibung der vorliegenden Erfindung solche Ausgestaltungen, Ausführungsformen, Vorteile, Beispiele oder dergleichen, welche nachfolgend - zu Zwecken der Vermeidung unnötiger Wiederholungen - nur zu einem einzelnen Erfindungsaspekt ausgeführt werden, selbstverständlich auch in Bezug auf die übrigen Erfindungsaspekte entsprechend gelten, ohne dass es einer ausdrücklichen Erwähnung bedarf.

Weiterhin versteht es sich von selbst, dass bei nachfolgenden Angaben von Werten, Zahlen und Bereichen die diesbezüglichen Werte-, Zahlen- und Bereichsangaben nicht beschränkend zu verstehen sind; es versteht sich für den Fachmann von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass sämtliche im Folgenden genannten Werte- bzw. Parameterangaben oder dergleichen grundsätzlich mit genormten bzw. standardisierten oder explizit angegebenen Bestimmungsverfahren oder aber anderenfalls mit dem Fachmann auf diesem Gebiet an sich geläufigen Bestimmungs- bzw. Messmethoden ermittelt bzw. bestimmt werden können. Sofern nicht anders angegeben, werden die zugrundeliegenden Werte bzw. Parameter unter Standardbedingungen (d.h. insbesondere bei einer Temperatur von 20 °C und/oder bei einem Druck von 1.013,25 hPa bzw. 1,01325 bar) ermittelt.

Im Übrigen gilt, dass bei sämtlichen nachstehend aufgeführten relativen bzw. prozentualen, insbesondere gewichtsbezogenen Mengenangaben zu beachten ist, dass diese Angaben im Rahmen der vorliegenden Erfindung vom Fachmann derart auszuwählen bzw. zu kombinieren sind, dass in der Summe - gegebenenfalls unter Einbeziehung weiterer Komponenten bzw. Inhaltsstoffe, insbesondere wie nachfolgend definiert - stets 100 % bzw. 100 Gew.-% resultieren. Dies versteht sich für den Fachmann aber von selbst.

Dies vorausgeschickt, wird im Folgenden die vorliegende Erfindung näher beschrieben und erläutert, und zwar auch anhand von bevorzugten Ausführungsformen bzw. Ausführungsbeispielen darstellenden Zeichnungen bzw. Figurendarstellungen.

Im Zusammenhang mit der Erläuterung dieser bevorzugten Ausführungsformen bzw. Ausführungsbeispiele der vorliegenden Erfindung, welche jedoch in Bezug auf die vorliegende Erfindung keinesfalls beschränkend sind, werden auch weitergehende Vorteile, Eigenschaften und Merkmale der vorliegenden Erfindung aufgezeigt.

Gegenstand der vorliegenden Erfindung - gemäß einem **ersten** Aspekt der vorliegenden Erfindung - ist somit ein textiles ballistisches Schutzmaterial mit Splitter-, Stich-, Schnitt-, Schuss- und/oder Stoßschutzfunktion zum Schutz bzw. zur Abdeckung oder Bedeckung und/oder Auskleidung von Gegenständen,
wobei das Schutzmaterial als flächiges und/oder zweidimensionales Textilmaterial in Form eines großflächigen zusammenhängenden, insbesondere einstückigen textilen Flächengebildes, bevorzugt in Form einer Abdeckung, eines Tuches, eines Lakens, einer Decke, einer Plane, einer Matte oder dergleichen, ausgebildet ist,
wobei das Textilmaterial als textile Maschenware, bevorzugt als Gestricke, ausgebildet ist und/oder vorliegt, wobei die Maschenware eine Vielzahl von Maschen einerseits und eine Vielzahl mindestens eines hiervon verschiedenen Bindungselements andererseits aufweist, wobei das Bindungselement ausgewählt ist aus der Gruppe von Henkel, Flottung (Flottierung), Schuss, Teilschuss und Stehfaden, und
wobei das Textilmaterial aus mindestens einem Polyethylen mit ultrahohem Molekulargewicht (*Ultra High Molecular Weight Polyethylene* bzw. UHMW-PE) besteht, wobei das Polyethylen mit ultrahohem Molekulargewicht (UHMW-PE) als Garn und/oder Zwirn und/oder Faden, vorzugsweise Filamentgarn, vorliegt und zur Ausbildung und/oder als Bestandteil des Schutzmaterials dient und/oder eingesetzt ist.

Denn die Anmelderin hat nunmehr in völlig überraschender Weise herausgefunden, dass in Bezug auf das erfindungsgemäße Schutzmaterial, welches in Form eines textilen Schutzmaterials vorliegt, in zweckgerichteter Art und Weise ein effektiver Splitter-, Stich-, Schnitt-, Schuss- bzw. Stoßschutz bereitgestellt werden kann, indem in zweckgerichteter Art und Weise ein sehr spezielles Textilmaterial auf Basis eines speziell hierfür vorgesehenen Materials eingesetzt wird (wobei auch eine hohe Schutzfunktion gegenüber durch Detonation bzw. Explosion freigesetzten Splittern sowie gegenüber ballistischen Körpern, wie Projektilen oder Geschossen, wie sie beispielsweise aus Schusswaffen stammen und darüber hinaus auch gegenüber penetrierenden Objekten bzw. Hieb-, Stich- und Stoßwaffen, wie Messern, Äxten oder dergleichen erzielt wird). Darüber hinaus kann die Schutzfunktion des erfindungsgemäßen Schutzmaterials durch eine individuelle Ausgestaltung bzw. durch den zweckgerichteten Einsatz ergänzender Splitterschutzvorrichtungen weiterführend erhöht werden.

Der Begriff "Splitterschutz", wie er erfindungsgemäß verwendet wird, ist dabei sehr breit zu verstehen und bezieht sich insbesondere auf die Bereitstellung einer Schutzfunktion gegenüber der Penetration bzw. dem Eindringen von direkt oder indirekt durch Detonation bzw. Explosion freigesetzten ballistischen Geschossen, insbesondere in Form von Splittern, welche sich insbesondere durch kleine Partikelgrößen und durch eine unregelmäßige Formgebung auszeichnen und welche insbesondere bei der Detonation von unkonventionellen Sprengvorrichtungen in Form von Primär- und/oder Sekundärsplittern explosionsartig freigesetzt werden und mit hoher Geschwindigkeit bzw. kinetischer Energie der Detonation ausgesetzte Personen treffen. In entsprechender Weise bezieht sich der Begriff "Schussschutz", wie er erfindungsgemäß verwendet wird, insbesondere auf die Bereitstellung einer Schutzfunktion gegenüber der Penetration bzw. dem Eindringen von insbesondere aus Schusswaffen stammenden Projektilen bzw. Geschossen bzw. ballistischen Körpern aus Schusswaffen oder dergleichen. Die Begriffe "Stichschutz" bzw. "Schnittschuss" beziehen sich im Rahmen der vorliegenden Erfindung insbesondere auf eine Schutzfunktion gegenüber sogenannten Hieb- und Stichwaffen, welche über eine spaltende bzw. stechende Wirkung verfügen. Hierbei handelt es sich beispielsweise um Messer oder dergleichen. Darüber fokussiert der Begriff "Stoßschutz", wie er im Rahmen der vorliegenden Verwendung verwendet wird, insbesondere auf die Bereitstellung einer Schutzfunktion gegenüber sogenannten Stoßwaffen, wobei es sich hierbei insbesondere um solche Waffen handelt, bei denen bei entsprechendem Einsatz eine Fokussierung bzw. Konzentration der Kraft auf einen Punkt vorliegt, und zwar im Allgemeinen ohne in den Körper einzustechen bzw. ohne Penetration in den Körper.

Durch die hervorragenden Schutzeigenschaften des erfindungsgemäßen Materials können auf Basis der erfindungsgemäßen Konzeption entsprechende Gegenstände bzw. Objekte, wie sie beispielsweise im militärischen Einsatz oder zur Terrorismusbekämpfung eingesetzt werden, in effektiver Weise vor eindringenden Partikeln bzw. vor zerstörender Krafteinwirkung geschützt werden.

Aufgrund der speziellen Materialausbildung des Schutzmaterials nach der Erfindung, insbesondere im Hinblick auf den Einsatz eines speziellen Textilmaterials, sowie der insbesondere einstückigen bzw. zusammenhängenden Ausbildung des textilen Schutzmaterials wird insgesamt ein sowohl einfach herzustellendes als auch einfach handzuhabendes und universell einsetzbares (z. B. als Abdeckung oder aber als Auskleidung von Gegenständen bzw. Objekten) Schutzmaterial bereitgestellt, welches insgesamt über herausragende Schutzeigenschaften verfügt.

Dabei wird im Rahmen der vorliegenden Erfindung ein sehr spezielles Material in Form eines Polyethylens mit ultrahohem Molekulargewicht (*Ultra High Molecular Weight Polyethylene* bzw. UHMW-PE) eingesetzt, und zwar insbesondere in Form eines Garns bzw. eines Zwirns bzw. eines Fadens, zur Ausbildung des im Rahmen der vorliegenden Erfindung eingesetzten textilen Flächenmaterials. In diesem Zusammenhang hat die Anmelderin nämlich in völlig überraschender Weise gefunden, dass sich der Einsatz eines derart speziellen Materials in besonderer Weise zur Ausbildung des Schutzmaterials nach der Erfindung eignet und gegenüber den im Stand der Technik vorgesehenen Materialien beispielsweise auf Basis von Para-Aramiden signifikante Vorteile aufweist: So weist das erfindungsgemäß zur Ausbildung des Schutzmaterials eingesetzte Polyethylen mit ultrahohem Molekulargewicht in Form von Garnen bzw. Zwirnen bzw. Fäden eine sehr hohe Zugfestigkeit sowie eine hohe Zähigkeit, eine hohe Bruch- bzw. Biegefestigkeit und ein sehr hohes E-Modul auf. Zudem ist UHMW-PE feuchtigkeits- bzw. UV-beständig, was gleichermaßen dazu führt, dass die erfindungsgemäß eingesetzten Materialien eine hohe Beständigkeit gegenüber Wasser aufweisen, einhergehend mit einer hohen Dauerhaftigkeit der ballistischen Schutzfunktion. Weiterhin weist das eingesetzte Material eine sehr gute Chemikalienbeständigkeit sowie eine hervorragende Bakterienbeständigkeit auf.

In diesem Zusammenhang ist es gleichermaßen völlig überraschend, dass besonders gute Schutzwirkungen erreicht werden, wenn das erfindungsgemäß eingesetzte Polyethylen mit ultrahohem Molekulargewicht bzw. die in diesem Zusammenhang vorliegenden Garne bzw. Zwirne bzw. Fäden in Form einer textilen Maschenware, wie einem Gewirke oder Gestricke, für das erfindungsgemäße Schutzmaterial verwendet werden. Denn auf dieser Basis resultieren äußerst feste textile Materialien bzw. Systeme, welche in erfindungsgemäßer Art und Weise die hohe Schutzfunktion des Materials insgesamt ermöglichen, und dies sowohl in Bezug auf Splitter bzw. ballistische Objekte als auch in Bezug auf den Einsatz spezieller Waffen.

Weiterhin ist auch herauszustellen, dass das erfindungsgemäße Schutzmaterial aufgrund seiner hohen Anpassungsfähigkeit und Universalität für eine große Vielzahl verschiedener Gegenstände bzw. Objekte eingesetzt werden kann - und dies sowohl im Hinblick auf unterschiedliche Größen als auch unterschiedliche Formgebungen der zu schützenden Gegenstände bzw. Objekte.

Auf Basis der speziellen technischen Maßnahmen, wie sie erfindungsgemäß vorgesehen sind, handelt es sich bei dem erfindungsgemäßen Schutzmaterial bzw. Penetrationsschutz für zugrundeliegende Gegenstände insbesondere um eine hochfeste textile Fläche zum Schutz gegen die Einwirkung von Kräften bzw. Körpern auf zu schützende Gegenstände bzw. auf insbesondere raumgebende Objekte. Das erfindungsgemäße Schutzmaterial dient zum Schutz gegen das Durchdringen und die Zerstörung von entsprechenden (Ober-)Flächen bzw. Außenmaterialien von zu schützenden Gegenständen bzw. Objekten. Das erfindungsgemäße Schutzmaterial in Form des hochfesten Textilmaterials schützt dabei insbesondere auch vor extern vorliegenden Zerstörungsmechanismen, welche zur Penetration bzw. Zerstörung des Gegenstands führen und dabei zudem zur Zerstörung eines etwaigen Inhalts des Gegenstands bzw. Objekts führen können. Das erfindungsgemäße Schutzmaterial in Form der hochfesten textilen Fläche schützt darüber hinaus auch vor sozusagen intern vorliegenden Zerstörungsmechanismen, wie vor einer Detonation bzw. Explosion in einem Gegenstand (z. B. Munitionsbehälter) bzw. von entsprechenden Wänden bzw. von äußeren Abgrenzungen umgebenen Räumen bzw. Objekten, wobei sowohl das betroffene Objekt als auch die unmittelbare Umgebung entsprechend geschützt werden.

Die erfindungsgemäß bereitgestellte Schutzfunktion wird dabei durch das gezielte und aufeinander abgestimmte Zusammenwirken spezifischer Eigenschaften auf Basis der zum Einsatz kommenden Grundmaterialien, der Art der Flächenkonstruktion sowie der Art und Weise der Integration in einen Gegenstand bzw. der Ausrüstung eines zu schützenden Gegenstands erzielt. Was die einfache Handhabbarkeit bzw. Anwendung des Schutzmaterials nach der Erfindung anbelangt, so kann das Schutzmaterial in nicht beschränkender Weise beispielsweise einfach über einen zu schützenden Gegenstand gelegt werden, so dass sich das Schutzmaterial beispielsweise zwischen Explosions- bzw. Detonationsort einerseits und zu schützendem Gegenstand andererseits befindet (sozusagen "Schutz von außen nach innen"). Das Schutzmaterial kann darüber hinaus auch in den Gegenstand als solchen integriert bzw. fester Bestandteil des Gegenstands als solchem sein, beispielsweise in Form von Verkleidungen oder dergleichen, so dass auch hierdurch eine individuelle Ausgestaltung der Schutzfunktion realisiert werden kann (sozusagen "Schutz von innen nach außen").

Insgesamt führt das erfindungsgemäße Schutzmaterial zu einem mehrfachen Schutz in Bezug auf den zu schützenden Gegenstand bzw. das zu schützende Objekt, wobei diesbezüglich in nicht beschränkender Art und Weise und lediglich beispielhaft drei Aspekte hervorgehoben werden:
- Das erfindungsgemäße Schutzmaterial führt im Anwendungsfall zu einer Reduktion bzw. zu einem Abbau von auf einen zu schützenden Gegenstand einwirkenden Kräften bzw. Zerstörungsenergien ballistisch wirkender Körper, wie Splittern oder Geschossen. Das erfindungsgemäße Schutzmaterial gewährleistet somit einen flächendeckenden Schutz auch gegenüber IED-basierten Explosionsauswirkungen. Auf dieser Basis kann die Anzahl an penetrierenden ballistischen Objekten, wie IED-basierten Fragmenten, signifikant reduziert bzw. die Penetrationstiefe verringert werden, wobei eine Vielzahl von Partikeln sogar vollständig von einem Eindringen in den zu schützenden Gegenstand abgehalten werden. Zudem werden die Auswirkungen der mit der Explosion einhergehenden Druckwelle vermindert. Insbesondere resultiert eine effektive Energieabsorption in Bezug auf penetrierende Primär- und Sekundärfragmente, so dass eindringende Fragmente in ihrer Wirkung stark abgeschwächt werden.
- Dies führt zu einem hochgradigen Schutz in Bezug auf den Gegenstand als solchen bzw. auf das zu schützende Objekt als solches und darüber hinaus auch von mit dem Objekt in Verbindung stehenden bzw. darin befindlichen weiteren Gegenständen sowie Personen, wie beispielsweise Fahrzeuginsassen im Fall von Fahrzeugen als konkret zu schützender Gegenstand. Folglich wird auch das Verletzungsbild betroffener Personen sozusagen indirekt (nämlich über den primären Schutz des Gegenstands bzw. des Objekts) abgeschwächt, wobei direkte Auswirkungen und langfristige Folgen etwaiger Verletzungen gleichermaßen reduziert werden. Dadurch, dass ein großer Teil der auf den zu schützenden Gegenstand bzw. das zu schützende Objekt treffenden Partikel bzw. Splitter durch das Schutzmaterial abgefangen wird, wird die Zerstörung des Gegenstands bzw. des zu schützenden Objekts verringert, so dass die Funktionalität und Anwendbarkeit erhalten bleibt, was auch zur Reduktion von Reparaturen führt, zumal im Rahmen der erfindungsgemäßen Konzeption auch Kleinstpartikel abgehalten werden, was insbesondere auch im Hinblick auf hochempfindliche Elektronikgeräte oder dergleichen von großer Bedeutung ist.
- Im Rahmen der vorliegenden Erfindung wird durch die Bereitstellung eines zusätzlichen Stich-, Schnitt- und Stoßschutzes auch die Einwirkung bzw. Penetration von beispielsweise im Rahmen direkter Angriffe eingesetzten Hieb- und Stichwaffen bzw. von Stoßwaffen reduziert, was gleichermaßen eine Zerstörung von zu schützenden Gegenständen bzw. Objekten bzw. eine Verletzung von darin befindlichen Personen verhindert.
   In diesem Zusammenhang verhindert das erfindungsgemäße Schutzmaterial die Penetration der eingesetzten Waffen, zumindest jedoch das vollständige Durchdringen der eingesetzten Waffen durch das Material bzw. beispielsweise durch die Außenwandung eines zu schützenden Gegenstands bzw. Objekts, was gleichermaßen die Gefahr einer Zerstörung des Gegenstands bzw. Objekts sowie die Gefahr der Verletzung von in einem Objekt befindlichen Personen reduziert.
   Auch diese Schutzeigenschaft führt zu dem technischen Erhalt bzw. zur Aufrechterhaltung der Funktionsweise der zu schützenden Gegenstände bzw. Objekte, so dass etwaige Reparaturen minimiert werden. Insgesamt gewährleistet das erfindungsgemäße Schutzmaterial auch einen effektiven Schnitt- bzw. Stichschutz.
- Grundsätzlich eignet sich das erfindungsgemäße Schutzmaterial beispielsweise auch als integraler Bestandteil, beispielsweise in Form einer Innenauskleidung oder dergleichen, eines zu schützenden Gegenstands bzw. eines zu schützenden Objekts, wie beispielsweise (Wohn-)Räumen, Aufbewahrungsbehältern bzw. Sammelbehältern für Explosionsstoffe, wie z. B. Munition, oder dergleichen. Im Fall einer Explosion bzw. Zündung explosiver Substanzen in dem zugrundeliegenden Innenraum des Gegenstands bzw. Objekts wird durch das erfindungsgemäße Schutzmaterial sozusagen ein Schutz nach außen bereitgestellt, in dem eine Penetration bzw. ein Durchdringen von Splittern oder dergleichen ausgehend von dem Innenraum des Gegenstands bzw. Objekts nach außen verhindert wird.
   In diesem Zusammenhang ist es im Rahmen der erfindungsgemäßen Konzeption auch gewährleistet, dass ein erhöhter Schutz für Personen bereitgestellt wird, welche derartige und mit dem erfindungsgemäßen Schutzmaterial ausgerüstete Gegenstände bzw. Objekte, beispielsweise Munitionssammelbehälter oder dergleichen, am Körper tragen.
   Mit dem erfindungsgemäßen Schutzmaterial ausgerüstete bzw. ausgekleidete Gegenstände bzw. Objekte, wie Munitionssammelbehälter, vermindern zudem die Gefahr einer Übertragung auf weitere Explosionsstoffe und deren Sammelbehälter in der Umgebung des geschützten Gegenstands und einer daraus folgenden Kettenreaktion, zumal der Wirkungsradius nach außen im Falle einer Explosion im Innenraum des Objekts bzw. Gegenstands verringert wird. Zudem wird auch die Penetrationstiefe durch Fragmente bzw. Munitionspartikel entsprechend verringert.

Darüber hinaus zeichnet sich die vorliegende Erfindung über weitere Eigenschaften und Vorteile aus, wie nachfolgend angeführt:
Das Schutzniveau des erfindungsgemäßen Schutzmaterials wird mittels eines speziellen Textilmaterials auf Basis eines Polyethylens mit ultrahohem Molekulargewicht bereitgestellt, was nämlich zu einem ballistisch schützenden, multifunktionalen hochfesten Material führt. Die Schutzfunktion wird somit durch eine spezielle textile Fläche bzw. ein Textilmaterial bereitgestellt. Erfindungsgemäß kann in Bezug auf einen zu schützenden Gegenstand das Textilmaterial bzw. das erfindungsgemäße Schutzmaterial in einen Gegenstand integriert (z. B. als Innenverkleidung) bzw. hierauf angebracht werden (z. B. als Schutzplane bzw. -decke).

Das erfindungsgemäße Schutzmaterial erfüllt die Anforderungen an einen ballistischen Fragmentschutz, wobei darüber hinaus und in Erweiterung hierzu zudem eine hohe Schnitt-, Reiß-, Stoß- und Stichfestigkeit bereitgestellt wird. Zudem werden die Auswirkungen einer aus einer Detonation bzw. Explosion resultierenden Druckwelle gemindert.

Die Fähigkeit der Energieabsorption des erfindungsgemäßen Schutzmaterials reduziert zudem die auftretenden Wirkungskräfte. Die Schutzeigenschaften werden durch die hohe spezifische Festigkeit, durch das hohe E-Modul, die hohe Zähigkeit und Bruchdehnung, die hohe Biegefestigkeit zur Längs- und Quergarnachse sowie eine ausgeprägte und hohe Abriebfestigkeit für das Grundmaterial in Form des erfindungsgemäß eingesetzten Polyethylens mit ultrahohem Molekulargewicht realisiert.

Auf Basis der erfindungsgemäßen Konzeption kann das Schutzniveau individuell eingestellt bzw. erhöht werden, beispielsweise durch eine gezielte Anpassung bzw. Auswahl der Materialdichte, die Verwendung mehrerer Lagen bzw. auf Basis multipler Lagenkonstruktionen bzw. durch den Einsatz zusätzlicher Splitterschutzelemente.

Das erfindungsgemäße Schutzmaterial bietet eine dauerhafte Beständigkeit und konstante Schutzleistung. Das erfindungsgemäße Schutzmaterial ist aufgrund der eingesetzten Materialien feuchtigkeitsbeständig, UV-beständig und weist generell eine sehr hohe Chemikalienbeständigkeit auf. Insofern ist es im Rahmen der vorliegenden Erfindung weiterhin von Vorteil, dass das Schutzmaterial nach der Erfindung nicht gegen äußere Umwelteinflüsse geschützt werden muss.

Das erfindungsgemäße Schutzmaterial ist zudem elastisch, dehnbar, formbar und flexibel. In diesem Zusammenhang lässt sich das erfindungsgemäße Schutzmaterial formen, falten bzw. komprimieren, und zwar ohne dabei die Materialstruktur zu beschädigen. Bei Entlastung nimmt das erfindungsgemäße Schutzmaterial zudem seine ursprüngliche Form wieder an. Auch insofern bleibt das durch das Schutzmaterial nach der Erfindung bereitgestellte Schutzniveau konstant bzw. dauerhaft erhalten.

Der Einsatz des Schutzmaterials in Form eines Textilmaterials, und zwar als Maschenwaren bzw. als Gestricke führt zu einer weiteren Verbesserung der ballistischen Haltefähigkeit, welche durch die textile Struktur auf Basis einer dichten, komplexen und kompakten Flächengestaltung bereitgestellt wird. Zudem zeichnet sich das Schutzmaterial nach der Erfindung durch ein sehr geringes Materialgewicht, eine geringe Warendicke sowie eine hohe Luftdurchlässigkeit bei gleichzeitig hoher Wasserdampfdurchlässigkeit aus. Zudem weist das erfindungsgemäße Schutzmaterial eine hohe Formstabilität auf.

Wie zuvor angeführt, ist das Schutzmaterial nach der Erfindung auf Basis des eingesetzten Textilmaterials flexibel, dehnfähig und innerhalb seiner Strukturen beweglich. Diese Eigenschaften führen - ohne sich auf diese Theorie beschränken zu wollen - zu einer optimalen bzw. verbesserten Energieabsorption von penetrierenden Objekten, so dass eine signifikante Geschwindigkeitsreduktion penetrierender Objekte erzielt und damit eine Reduzierung der von dem penetrierenden Objekt ausgehenden Wirkungskräfte herbeigeführt wird. Die Dehnfähigkeit des Schutzmaterials nach der Erfindung ermöglicht auch eine Anpassung bzw. Adaption an das auf das Schutzmaterial aufschlagende bzw. das Schutzmaterial penetrierende Objekt, beispielsweise in Form eines ballistischen Objekts bzw. einer Waffe, wie zuvor definiert. Dies führt zu einer Erhöhung der Kontaktdauer, so dass mehr Energie durch das erfindungsgemäße Schutzmaterial absorbiert werden kann, was den Penetrationsschutz gleichermaßen erhöht.

Insgesamt bleiben die Schutzleistungen und die Eigenschaften des erfindungsgemäßen Schutzmaterials dauerhaft erhalten, und zwar unabhängig von Umgebungs-, Umwelteinflüssen und von klimatischen Gegebenheiten. Auch insofern ist es im Rahmen der vorliegenden Erfindung nicht erforderlich, die textile Schutzhülle beispielsweise mit einer zusätzlichen Schutzumhüllung oder dergleichen auszurüsten, obwohl dieses erfindungsgemäß grundsätzlich vorgesehen sein kann.

Wie zuvor angeführt, ist das Schutzmaterial nach der Erfindung derart konzipiert, dass insgesamt eine unkomplizierte Anwendung realisiert werden kann. Das Schutzmaterial nach der Erfindung ist leicht, robust und widerstandsfähig und auch von daher einfach und schnell anzuwenden und nach erfolgter Anwendung auch einfach wieder zu verstauen. Das Schutzmaterial kann dabei komprimiert bzw. gefalten werden, und zwar ohne dass eine Beschädigung im Produkt selbst vorliegt, so dass auch die entsprechenden Schutzeigenschaften erhalten bleiben. Das erfindungsgemäße Schutzmaterial kann zudem direkten Umwelteinflüssen sowie wechselnden klimatischen Bedingungen und deren Auswirkungen ausgesetzt werden, ohne dass eine Beschädigung des Produkts resultiert, so dass auch von daher die Schutzleistung dauerhaft aufrechterhalten bleibt.

Darüber hinaus ist im Rahmen der vorliegenden Erfindung eine hervorragende Anpassbarkeit des Schutzmaterials in Bezug auf das zu schützende Objekt bzw. den zu schützenden Gegenstand gegeben, was insbesondere auch mit der durch die entsprechenden Materialeigenschaften gegebenen hohen Flexibilität gewährleistet wird. Insbesondere sind die Materialstruktur, die Schnittführung bzw. die Verarbeitung des Schutzmaterials sowie der gegebenenfalls vorhandenen ergänzenden Splitterschutzelemente so gewählt, dass das Schutzmaterial insgesamt in optimaler Weise an die Formgebung eines zu schützenden Gegenstands bzw. Objekts angepasst werden kann. Dies führt im Anwendungszustand des Schutzmaterials zu einer Vermeidung eines starken Verrutschens bzw. einer übermäßigen Faltenbildung, was nämlich zu einer Reduktion der Schutzeigenschaften führen würde. Auch von daher bleiben die entsprechenden Schutzeigenschaften des erfindungsgemäßen Schutzmaterials bei entsprechender Beanspruchung bzw. im Rahmen des Einsatzes erhalten.

Im Nachfolgenden wird die vorliegende Erfindung anhand von auch bevorzugte Ausführungsformen bzw. Ausführungsbeispiele darstellenden Zeichnungen bzw. Figurendarstellungen beschrieben, wobei die diesbezüglichen Ausführungen für sämtliche erfindungsgemäße Aspekte gelten und wobei die entsprechenden bevorzugten Ausführungsformen keinesfalls beschränkend sind.

In den Figurendarstellungen zeigt:
- Fig. 1A: eine Querschnittsdarstellung eines erfindungsgemäßen Schutzmaterials bzw. eines ergänzenden Splitterschutzelements mit einlagigem Aufbau und mit ergänzendem textilen Abdeckmaterial bzw. ergänzender textiler Abdeckschicht;
- Fig. 1B: eine Querschnittsdarstellung eines Schutzmaterials bzw. eines Splitterschutzelements mit mehrlagigem Aufbau und mit ergänzendem textilen Abdeckmaterial;
- Fig. 1C: eine Querschnittsdarstellung eines erfindungsgemäßen ergänzenden Splitterschutzelements mit einlagigem Aufbau und mit ergänzendem textilen Abdeckmaterial bzw. ergänzender textiler Abdeckschicht;
- Fig. 2A: eine schematische Darstellung des Aufbaus einer textilen Maschenware gemäß einer erfindungsgemäßen Ausführungsform zur Ausbildung des erfindungsgemäßen Schutzmaterials bzw. eines ergänzenden Splitterschutzelementes, wobei die textile Maschenware als Gewirke mit Bindungselementen in Form von Flottungen ausgebildet ist;
- Fig. 2B: eine weitere schematische Darstellung des Aufbaus einer für das Schutzmaterial bzw. ein ergänzendes Splitterschutzelement eingesetzten textilen Maschenware in Form eines Gestrickes gemäß einer alternativen erfindungsgemäßen Ausführungsform, wonach die Bindungselemente zudem in Form von Henkeln ausgebildet sind;
- Fig. 2C: eine schematische Darstellung des Aufbaus eines für ein Schutzmaterial bzw. ein ergänzendes Splitterschutzelement eingesetzten Textilmaterials in Form eines Gewebes mit den entsprechenden Kettfäden und Schussfäden (Vergleich);
- Fig. 3A: eine schematische Darstellung eines Anwendungsbeispiels des erfindungsgemäßen Schutzmaterials, wonach ein zu schützender Gegenstand bzw. ein Objekt in Form eines Transportfahrzeugs vollständig von dem Schutzmaterial bedeckt ist;
- Fig. 3B: eine weitere Anwendungsform des Schutzmaterials, wonach ein zu schützender Gegenstand bzw. ein Objekt in Form eines Transportfahrzeugs abschnittsweise mit dem Schutzmaterial ausgerüstet ist;
- Fig. 3C: eine weitere schematische Darstellung einer Anwendungsform des erfindungsgemäßen Schutzmaterials, wonach das Schutzmaterial in dem als Transportfahrzeug vorliegenden Objekt in Form einer Abdeckplane mit ergänzenden Aufnahmevorrichtungen zur Aufnahme von ergänzenden Splitterschutzelementen ausgerüstet ist;
- Fig. 4A: eine weitere schematische Darstellung einer Anwendungsform des erfindungsgemäßen Schutzmaterials, wonach das Schutzmaterial als Überwurf über ein Zelt, in dem sich zu schützende Gegenstände befinden, eingesetzt wird;
- Fig. 4B: eine weitere schematische Darstellung einer Anwendungsform des erfindungsgemäßen Schutzmaterials, wonach das Schutzmaterial als Innenauskleidung eines Gegenstands in Form eines Behältnisses oder dergleichen zum Erhalt einer erfindungsgemäßen Schutzmaterialeinheit eingesetzt wird.

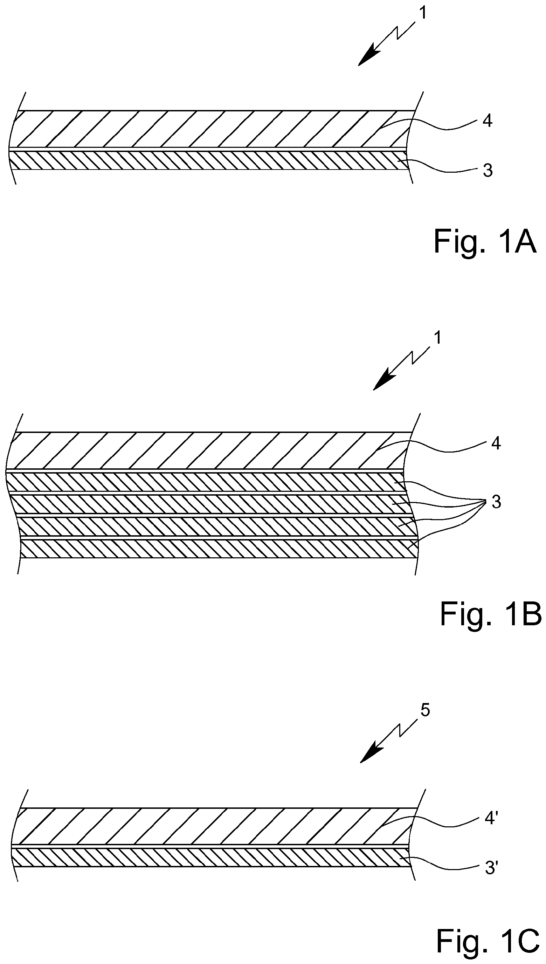

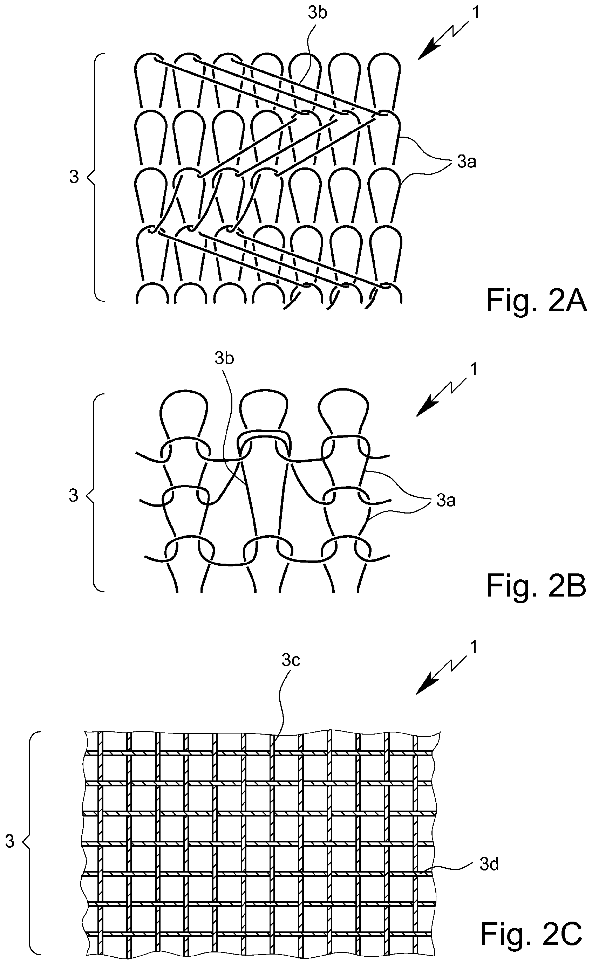

Die Figurendarstellungen, insbesondere Figuren 1A und 1B sowie 2A bis 2B, verdeutlichen dabei insbesondere auch den ersten erfindungsgemäßen Aspekt der vorliegenden Erfindung, wonach nämlich ein textiles ballistisches Schutzmaterial mit Splitter-, Stich-, Schnitt-, Schuss- und/oder Stoßschutzfunktion zum Schutz und/oder zur Abdeckung oder Bedeckung und/oder zur Auskleidung von Gegenständen 2 bereitgestellt wird, wobei das Schutzmaterial 1 als flächiges und/oder zweidimensionales Textilmaterial 3 in Form eines großflächigen zusammenhängenden, insbesondere einstückigen textilen Flächengebildes, bevorzugt in Form einer Abdeckung, eines Tuches, eines Lakens, einer Decke, einer Plane, einer Matte oder dergleichen, ausgebildet ist, wobei das Textilmaterial 3 als textile Maschenware, bevorzugt als Gestricke, ausgebildet ist und/oder vorliegt, wobei die Maschenware eine Vielzahl von Maschen 3a einerseits und eine Vielzahl mindestens eines hiervon verschiedenen Bindungselements 3b andererseits aufweist, wobei das Bindungselement 3b ausgewählt ist aus der Gruppe von Henkel, Flottung (Flottierung), Schuss, Teilschuss und Stehfaden, und wobei das Textilmaterial 3 aus mindestens einem Polyethylen mit ultrahohem Molekulargewicht (*Ultra High Molecular Weight Polyethylene* bzw. UHMW-PE) aufweist oder hieraus besteht, wobei das Polyethylen mit ultrahohem Molekulargewicht (UHMW-PE) als Garn und/oder Zwirn und/oder Faden, vorzugsweise Filamentgarn, vorliegt und zur Ausbildung und/oder als Bestandteil des Schutzmaterials 1 dient und/oder eingesetzt ist.

Wie zuvor angeführt, wird auf Basis der vorliegenden Erfindung die Penetration bzw. das Eindringen von Splittern, aber auch eine schädigende Einwirkung von Hieb- und Stichwaffen sowie von Stoßwaffen in Bezug auf mit dem Schutzmaterial geschützte Gegenstände nachhaltig verringert bzw. sogar unterbunden, was insbesondere durch die speziellen Eigenschaften des erfindungsgemäßen Schutzmaterials bzw. der ergänzenden Splitterschutzelemente, wie nachfolgend noch angeführt, gewährleistet wird.

Was den zugrundeliegenden Gegenstand 2 anbelangt, welcher im Rahmen der erfindungsgemäßen Konzeption geschützt wird, so weist der Gegenstand 2 im Allgemeinen eine definierte physische Ausdehnung bzw. eine definierte Formgebung auf. Zudem handelt es sich bei dem Gegenstand 2 im Allgemeinen um einen technischen Gegenstand. Zudem kann es sich bei dem Gegenstand 2 um einen mechanischen bzw. elektronischen Gegenstand handeln. Darüber hinaus kann der Gegenstand 2 ein ziviler oder militärischer Gegenstand, insbesondere ein militärischer Gegenstand, vorzugsweise ein technisch-militärischer, mechanischmilitärischer bzw. elektronisch-militärischer Gegenstand sein. Insbesondere kann es sich bei dem erfindungsgemäß zu schützenden Gegenstand 2 um einen solchen Gegenstand 2 handeln, welcher ausgewählt ist aus der Gruppe von militärischen Gegenständen und militärischen Gerätschaften, vorzugsweise aus der Gruppe von militärischen Ausrüstungsgegenständen und/oder militärischen Gerätschaften. Insbesondere kann der Gegenstand 2 ausgewählt sein aus der Gruppe von vorzugsweise militärischen Fahrzeugen, Maschinen, Waffen, Munition, Ersatzteilen, Elektronikgegenständen, Zubehörgegenständen, Anlagen, Einrichtungen, Ausrüstungen oder dergleichen. Insbesondere kann es sich bei dem Gegenstand auch um Behältnisse bzw. Aufnahmebehälter, beispielsweise um Aufnahmebehälter für Munition handeln, welche beispielsweise innenseitig mit dem erfindungsgemäßen Schutzmaterial ausgerüstet werden können.

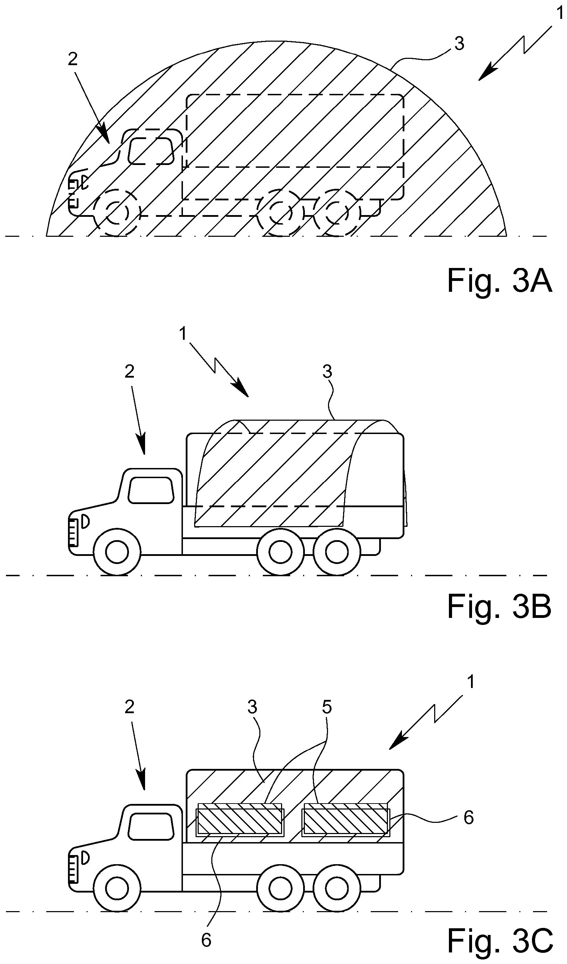

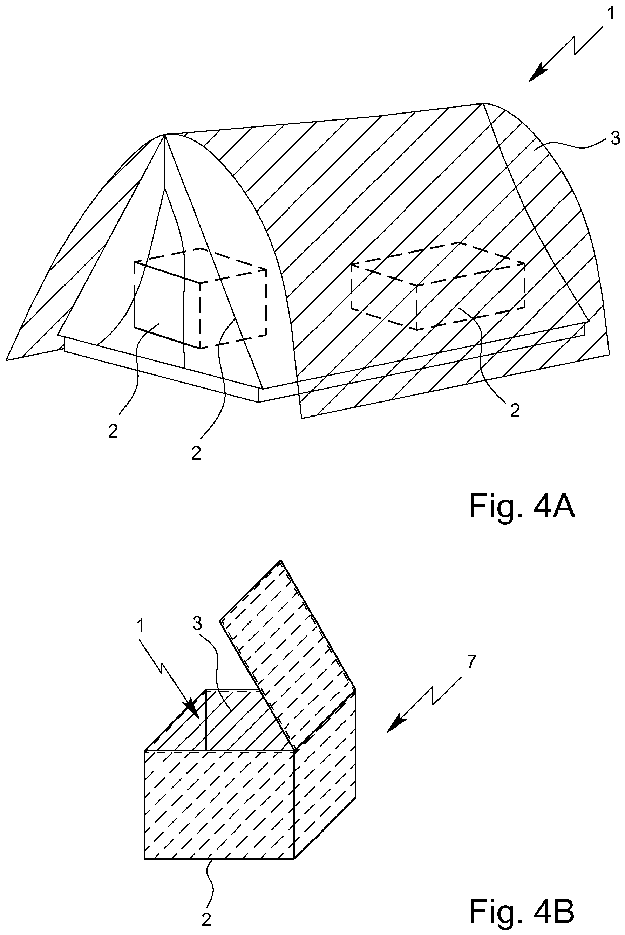

In nicht beschränkender Weise kann es sich bei dem zu schützenden Gegenstand 2 bzw. zu schützenden Objekt 2 beispielsweise um Fahrzeuge, wie (Personen-)Transportfahrzeuge, Aufbewahrungsbehälter, Gefäße, Boxen, Zelte, Zeltbahnen, Planen, Abdeckungen, mobile Wände, Silos, Tanks, Container oder dergleichen, handeln. Gleichermaßen kann der zu schützende Gegenstand bzw. das zu schützende Objekt auch ein Gebäude oder dergleichen sein. Insbesondere können auf Basis der erfindungsgemäßen Konzeption auch Fahrzeuginnenräume bzw. Räume von Gebäuden in entsprechender Weise geschützt werden. Im Allgemeinen kann das erfindungsgemäße Schutzmaterial zum Schutz von Objekten, insbesondere Gerätschaften, Zubehör, Ausrüstung, Elektronik, Munition, sensiblen Einrichtungen und Anlagen, dienen. Gleichermaßen kann das Schutzmaterial auch als Schutz für die Umgebung von Objekten dienen, sofern das zugrundeliegende Objekt selbst Gegenstand beispielsweise einer Explosion bzw. Detonation ist, wie es insbesondere im Fall von Autobomben oder dergleichen der Fall ist (vgl. Fig. 3A bis 3C sowie Fig. 4A und 4B).

Was das erfindungsgemäße Schutzmaterial 1 weiterhin anbelangt, so kann dieses gemäß einer erfindungsgemäßen Ausführungsform der physischen Ausdehnung bzw. der Formgebung des Gegenstands 2 angepasst sein. Hieraus resultiert eine insgesamt verbesserte Schutzfunktion.

Im Rahmen der vorliegenden Erfindung verhält es sich insbesondere derart, dass das Schutzmaterial 1 nicht als Bekleidungsstück für Personen ausgebildet ist. Dementsprechend fokussiert die vorliegende Erfindung auf einen Schutz von Gegenständen bzw. Objekten als solchen. Dabei kann es erfindungsgemäß jedoch vorgesehen sein, dass sozusagen nach Art eines sekundären Schutzes auch Personen geschützt werden, beispielsweise für den Fall, dass sich Personen in einem zu schützenden Gegenstand bzw. zu schützenden Objekt aufhalten, wie es beispielsweise für Insassen eines insbesondere militärischen (Personen-)Transportfahrzeugs der Fall sein kann.

Im Allgemeinen ist es erfindungsgemäß vorgesehen, dass das Schutzmaterial 1 insbesondere im Einsatz- und oder Anwendungszustand außenseitig auf dem Gegenstand 2 angeordnet ist, beispielsweise nach Art eines Überwurfs, einer Decke, eines Lakens, einer Abdeckung, einer Hülle, einer Haube oder dergleichen (vgl. Fig. 3A, 3B). Zudem kann das Schutzmaterial den Gegenstand 2 zumindest teilweise abdecken bzw. bedecken (vgl. insbesondere Fig. 3A, 3B, 3C, 4A).

Zudem kann es erfindungsgemäß vorgesehen sein, dass das Schutzmaterial 1 reversibel bzw. nicht dauerhaft (nicht permanent), vorzugsweise abnehmbar, mit dem Gegenstand 2 verbunden ist. Dies kann beispielsweise für den Fall der Ausbildung des Schutzmaterials 1 als Überwurf oder dergleichen der Fall sein.

Erfindungsgemäß kann es auch vorgesehen sein, dass das Schutzmaterial 1 nach der Erfindung in den Gegenstand 2 integriert ist. Insbesondere kann es erfindungsgemäß vorgesehen sein, dass das Schutzmaterial 1 den zu schützenden Gegenstand 2 zumindest teilweise bzw. zumindest abschnittsweise auskleidet (vgl. Fig. 4B).

Insbesondere kann das Schutzmaterial 1 somit auch als Auskleidung des zu schützenden Gegenstands 2 vorliegen. Erfindungsgemäß kann es somit vorgesehen sein, dass das Schutzmaterial 1 eine Auskleidung des Gegenstands 2 bildet.

Insbesondere kann das Schutzmaterial 1 gemäß einer besonderen Ausführungsform ein Bestandteil des Gegenstands 2 sein.

Zudem können gemäß einer anderen besonderen Ausführungsform das Schutzmaterial 1 und der Gegenstand 2 eine Einheit ausbilden.

Das Schutzmaterial 1 kann im Allgemeinen insbesondere fest bzw. dauerhaft (permanent) mit dem Gegenstand 2 verbunden, insbesondere vernäht, verschweißt, laminiert und/oder verklebt sein. Insbesondere kann das Schutzmaterial 1 zumindest im Wesentlichen vollflächig mit dem Gegenstand 2 verbunden sein. Zudem kann das Schutzmaterial 1 zumindest abschnittsweise, insbesondere punktuell, linienförmig bzw. rasterförmig, mit dem Gegenstand 2 verbunden sein. Beispielsweise kann das Schutzmaterial als Türverkleidung beispielsweise von (Transport-)-Fahrzeugen oder dergleichen ausgebildet sein.

Auch für die erfindungsgemäße Ausführungsform, wonach das Schutzmaterial 1 in den Gegenstand 2 integriert ist, kann das Schutzmaterial reversibel bzw. nicht dauerhaft mit dem Gegenstand 2 verbunden sein.

Im Allgemeinen kommen reversible Verbindungen, beispielsweise in Form einer Reißverschluss-, Klett- und/oder Knopfverbindung, erfindungsgemäß in Betracht.

Das erfindungsgemäße Schutzmaterial 1 zeichnet sich zudem durch einen hohen Splitter- bzw. Ballistikschutz aus: In diesem Zusammenhang kann das Schutzmaterial 1 einen Splitter- und/oder Ballistikschutzwert V₅₀, bestimmt gemäß STANAG 2920, von mindestens 180 m/s, insbesondere mindestens 200 m/s, vorzugsweise mindestens 225 m/s, bevorzugt mindestens 250 m/s, besonders bevorzugt mindestens 275 m/s, ganz besonders bevorzug mindestens 300 m/s, weiter bevorzugt mindestens 325 m/s, noch weiter bevorzugt mindestens 350 m/s, aufweisen. Das Schutzmaterial 1 nach der Erfindung kann insbesondere einen Splitter- und/oder Ballistikschutzwert V₅₀, bestimmt gemäß STANAG 2920, im Bereich von 180 m/s bis 800 m/s, insbesondere 200 m/s bis 750 m/s, vorzugsweise 225 m/s bis 700 m/s, bevorzugt 250 m/s bis 650 m/s, besonders bevorzugt 275 m/s bis 600 m/s, ganz besonders bevorzugt 300 m/s bis 550 m/s, noch weiter bevorzugt 325 m/s bis 525 m/s, wiederum weiter bevorzugt 350 m/s bis 525 m/s, aufweisen.

Die erfindungsgemäß angegebenen Ballistikschutzwerte V₅₀, bestimmt gemäß STANAG 2920, beziehen sich dabei insbesondere auf eine Bestimmung unter Verwendung von Projektilen in Form von RCCs mit einem Projektilgewicht von 0,13 g (mit RCC = *Right Circular Cylinder*). Die gemäß STANAG 2920 angeführten Ballistikschutzwerte V₅₀ werden insbesondere bei einer Temperatur von (20 ± 2) °C und insbesondere bei einer relativen Luftfeuchtigkeit von (65 ± 4) % bestimmt.

Der V₅₀-Wert bezieht sich dabei insbesondere auf die Geschwindigkeit (m/s), bei welcher unter Verwendung eines definierten Projektils und ausgewählten (Test-)Materials eine Wahrscheinlichkeit einer durch das Projektil hervorgerufenen Perforation bzw. Penetration des Materials von 0,5 (mit 1 gleich maximale Wahrscheinlichkeit) bzw. von 50 % vorliegt. Für weitere Ausführungen kann auf die entsprechende Norm gemäß STANAG 2920 verwiesen werden.

In diesem Zusammenhang werden die hohen Schutzeigenschaften des erfindungsgemäßen Schutzmaterials durch den erfindungsgemäß spezifizierten hohen V₅₀-Wert gemäß STANAG 2920 von mindestens 180 m/s gewährleistet, welcher insbesondere bereits bei einlagiger bzw. einschichtiger Ausbildung des Schutzmaterials bzw. der nachfolgend noch beschriebenen Splitterschutzelemente erreicht wird.

Erfindungsgemäß ist das Schutzmaterial 1 als textile Maschenware, insbesondere als Gewirke oder Gestricke, vorzugsweise als Gestricke, ausgebildet bzw. liegt als solches vor. In diesem Zusammenhang weist die Maschenware eine Vielzahl von Maschen 3a einerseits und eine Vielzahl mindestens eines hiervon verschiedenen Bindungselements 3b andererseits auf. Die Bereitstellung des Schutzmaterials in Form einer textilen Maschenware ist mit dem Vorteil verbunden, dass das zugrundeliegende textile Flächenmaterial aufgrund der Maschenstruktur elastisch, dehnbar und flexibel ist, was einerseits die Passgenauigkeit gegenüber dem zu schützenden Gegenstand 2 weiterführend verbessert und andererseits dazu führt, dass bei dieser Ausführungsform das Schutzmaterial 1 gut verstaut und transportiert werden kann. Aufgrund der hohen Elastizität bzw. Dehnbarkeit werden zudem die Schutzeigenschaften weiterführend verbessert, da das Energieabsorptionsverhalten insbesondere gegenüber ballistischen Körpern und Hieb- bzw. Stichwaffen nochmals verbessert ist.

Was die Ausbildung des Schutzmaterials nach der Erfindung bzw. des Textilmaterials 3 als Maschenware, insbesondere als Gewirke, anbelangt, so kann diesbezüglich insbesondere auf Fig. 2A bzw. Fig. 2B verwiesen werden.

Was das Bindungselement 3b der Maschenware anbelangt, so ist es erfindungsgemäß vorgesehen, dass dieses ausgewählt ist aus der Gruppe von Henkel, Flottung (Flottierung), Schuss, Teilschuss und Stehfaden, vorzugsweise Henkel und Flottung (Flottierung). Insbesondere ist das Bindungselement in Form eines Henkels und/oder einer Flottung (Flottierung) ausgebildet.

In diesem Zusammenhang zeigt Fig. 2A die Ausbildung der Bindungselemente in Form von Flottungen, während Fig. 2B die Ausbildung der Bindungselemente in Form von Henkeln darstellt. Durch den Einsatz spezieller Bindungselemente 3b wird die mechanische Stabilität bzw. Integrität der textilen Maschenware bzw. des Textilmaterials 3 nochmals verbessert, einhergehend mit einer weiterführenden Erhöhung der ballistischen Schutzleistung.

Was das Schutzmaterial 1 nach der Erfindung weiterhin anbelangt, so kann das Schutzmaterial 1 bzw. das Textilmaterial 3 als textile Maschenware, insbesondere als Gewirke oder Gestricke, vorzugsweise als Gestricke, ausgebildet sein bzw. als solches vorliegen. Weiterhin kann die Maschenware eine Grundlegung, ausgewählt aus der Gruppe von Franse, Trikot, Tuch, Satin, Samt und Atlas, aufweisen, wobei die Maschenware eine RECHTS/LINKS (RL)-, RECHTS/RECHTS (RR)- oder LINKS/LINKS (LL)-Maschenbindung aufweist.

Erfindungsgemäß werden im Allgemeinen besonders gute Ergebnisse auch hinsichtlich des ballistischen Schutzes erreicht, wenn das Textilmaterial 3 bzw. die textile Maschenware in Form eines Gestrickes vorliegt und/oder als Gestrick ausgebildet ist.

Dabei zeichnet sich eine RL-Maschenware dadurch aus, dass sie auf der einen Seite nur linke und auf der anderen Seite nur rechte Maschen aufweist. Eine linke Maschenseite ist dadurch gekennzeichnet, dass an den unteren Bindungsstellen die Maschenfüße über und die Maschenschenkel unter dem Maschenkopf der vorhergehenden Masche liegen. Demgegenüber zeichnet sich eine rechte Maschenseite dadurch aus, dass an den unteren Bindungsstellen die Maschenfüße unter und die Maschenschenkel über dem Maschenkopf der vorhergehenden Masche liegen. Eine RR-Maschenware zeigt auf beiden Warenseiten rechte Maschenseiten auf, während die LL-Maschenware auf beiden Warenseiten vorwiegend linke Maschenseiten aufweisen.

Grundsätzlich kommt auch die Ausbildung des Schutzmaterials 1 bzw. des Textilmaterials 3 in Form der textilen Maschenware als Rundstrick oder Flachstrick bzw. als Kettenwirkware bzw. Kettengewirk und/oder als Kulierwirkware bzw. Kuliergewirk, insbesondere wie zuvor angeführt, in Betracht.

Wie in Fig. 2 A und Fig. 2 B dargestellt, kann es erfindungsgemäß im Hinblick auf die Ausbildung des Textilmaterials 3 in Form der textilen Maschenware vorgesehen sein, dass das Bindungselement 3b ausgewählt ist aus der Gruppe von Henkel, Flottung (Flottierung), Schuss, Teilschuss und Stehfaden, vorzugsweise Henkel und Flottung (Flottierung). Insbesondere kann das Bindungselement 3b in Form einer Flottung (Flottierung) und/oder eines Henkels ausgebildet sein. In diesem Zusammenhang zeigt Fig. 2 A die Ausbildung der Bindungselemente in Form von Flottungen, während Fig. 2 B die Ausbildung der Bindungselemente in Form von Henkeln darstellt. Durch den Einsatz spezieller Bindungselemente 3b wird - wie die Anmelderin in völlig überraschender Weise gefunden hat - die mechanische Stabilität bzw. Integrität der textilen Maschenware 3 nochmals verbessert, einhergehend mit einer weiterführenden Erhöhung der ballistischen Schutzleistung.

Insbesondere kann das Schutzmaterial 1 bzw. das Textilmaterial 3 als textile Maschenware in Form eines Gewirkes, insbesondere Kettenwirkware und/oder Kulierwirkware, vorzugsweise Kettenwirkware, ausgebildet sein bzw. vorliegen. Hierdurch kann die ballistische Schutzfunktion nochmals verbessert werden.

Gemäß einer nicht erfindungsgemäßen Ausführungsform kann es vorgesehen sein, dass das Schutzmaterial 1 bzw. das Textilmaterial 3 als Gewebe ausgebildet ist, wobei das Gewebe eine Vielzahl von Ketten (Kettfäden 3c) und eine Vielzahl von Schüssen (Schussfäden) 3d aufweist. Diesbezüglich kann auf Fig. 2C verwiesen werden.

Was das erfindungsgemäß zur Ausbildung des Schutzmaterials 1 bzw. des dem Schutzmaterial 1 zugrundeliegenden Textilmaterials 3 eingesetzte Polyethylen mit ultrahohem Molekulargewicht (UHMW-PE) anbelangt, so ist es erfindungsgemäß bevorzugt, dass das UHMW-PE als Garn und/oder Zwirn und/oder Faden, vorzugsweise Filamentgarn, vorliegt, insbesondere zur Ausbildung des Schutzmaterials 1 und/oder insbesondere zur Ausbildung des Textilmaterials 3 und/oder insbesondere zur Ausbildung der Maschenware, bevorzugt des Gestrickes, und/oder insbesondere zur Ausbildung der textilen Maschenware, vorzugsweise zur Ausbildung der Maschen 3a und/oder der Bindungselemente 3b, bevorzugt der Maschen 3a und der Bindungselemente 3b, der textilen Maschenware.

Im Allgemeinen ist erfindungsgemäß der Einsatz von Garnen bevorzugt. Filamentgarne zeichnen sich zudem durch eine besonders hohe Festigkeit aus, einhergehend mit einer weiterführenden Verbesserung der ballistischen Schutzeigenschaften.

Erfindungsgemäß kann es grundsätzlich vorgesehen sein, dass die Maschen 3a und/oder die Bindungselemente 3b, unabhängig voneinander, jeweils aus einem Garn und/oder Zwirn und/oder Faden, vorzugsweise Filamentgarn, gebildet sind oder wobei die Maschen 3a und/oder die Bindungselemente 3b, unabhängig voneinander, jeweils aus mindestens zwei Garnen und/oder mindestens zwei Zwirnen und/oder mindestens zwei Fäden, vorzugsweise Filamentgarnen, gebildet sind. Zudem können die Ketten und/oder Schüsse, unabhängig voneinander, jeweils aus einem Garn und/oder Zwirn und/oder Faden, vorzugsweise Filamentgarn, gebildet sein. Auch kann es vorgesehen sein, dass die Ketten und/oder Schüsse, unabhängig voneinander, jeweils aus mindestens zwei Garnen und/oder mindestens zwei Zwirnen und/oder mindestens zwei Fäden, vorzugsweise Filamentgarnen, gebildet sind. Wie zuvor angeführt, umfasst das Garn bzw. der Zwirn bzw. der Faden das zuvor angeführte UHMW-PE oder besteht daraus.

Mit anderen Worten kann es erfindungsgemäß somit vorgesehen sein, dass das Polyethylen mit ultrahohem Molekulargewicht (UHMW-PE) als maschenausbildender Faden bzw. als Kettfaden und/oder Schussfaden ausgebildet bzw. angeordnet ist. Insbesondere kann es vorgesehen sein, dass das Polyethylen mit ultrahohem Molekulargewicht (UHMW-PE) als Bindungselement, insbesondere ausgewählt aus der Gruppe von Flottung (Flottierung), Henkel, Schussfaden, Stehfaden und Teilschuss, ausgebildet bzw. angeordnet ist.

In diesem Zusammenhang können die jeweiligen Garne bzw. Zwirne bzw. Fäden jeweils aus demselben Material bestehen. Gleichermaßen ist es im Rahmen der vorliegenden Erfindung auch möglich, dass die jeweiligen Garne bzw. Zwirne bzw. Fäden aus voneinander verschiedenen Materialien bestehen, wobei diesbezüglich die nachfolgend angeführten Materialien eingesetzt werden können. Hierdurch können weitere Materialeigenschaften gezielt bereitgestellt werden, beispielsweise im Hinblick auf die Bereitstellung von feuer- bzw. flammhemmenden Eigenschaften oder dergleichen.

Erfindungsgemäß kann es zudem vorgesehen sein, dass das Garn und/oder der Zwirn und/oder der Faden, insbesondere das Filamentgarn, eine Mehrzahl an (Einzel-)Filamenten aufweist. In diesem Zusammenhang kann das Garn und/oder der Zwirn und/oder der Faden, insbesondere das Filamentgarn, mindestens zwei, insbesondere mindestens drei, vorzugsweise mindestens vier (Einzel-)Filamente und bis zu 800 (Einzel-)Filamente, aufweisen oder hieraus bestehen. Zudem können die (Einzel-)Filamente, unabhängig voneinander, jeweils einen Durchmesser im Bereich von 5 µm bis 50 µm, insbesondere 6 µm bis 40 µm, vorzugsweise 8 µm bis 30 µm, bevorzugt 10 µm bis 25 µm, aufweisen.

In diesem Zusammenhang führt eine hohe Anzahl an Filamenten zu einer weiteren Erhöhung der ballistischen Stabilität. Insbesondere führt eine hohe Filamentanzahl im Garn zu einer weiterführenden Stabilisierung des daraus hergestellten Materials, insbesondere - ohne sich auf diese Theorie beschränken zu wollen - da auftreffende kinetische Energie im verbesserten Maße aufgenommen und abgeführt werden kann, was das Abfangen von penetrierenden Objekten in Form von Splittern verbessert.

Erfindungsgemäß kann es zudem vorgesehen sein, dass das Garn und/oder der Zwirn und/oder der Faden, insbesondere das Filamentgarn, in Z-Richtung oder in S-Richtung, vorzugsweise in Z-Richtung, gedreht ist. Insbesondere kann das Garn bzw. der Zwirn bzw. der Faden mit einer Garn-, Zwirn- und/oder Fadendrehung im Bereich von 50 T/m bis 180 T/m (Drehungen pro Meter), vorzugsweise 60 T/m bis 150 T/m, vorzugsweise 70 T/m bis 125 T/m, bevorzugt 75 T/m bis 110 T/m gedreht sein. In diesem Zusammenhang hat die Anmelderin in völlig überraschender Weise gefunden, dass die oben angeführten Bereiche hinsichtlich der Drehung zu einer Optimierung der ballistischen Schutzeigenschaften führen, insbesondere da auch auf dieser Basis - ohne sich auf diese Theorie beschränken zu wollen - ein optimierter Energieabtransport bzw. eine optimale Verteilung von durch das Aufschlagen von Splittern eingetragener kinetischer Energie gewährleistet ist.

Das insbesondere für das Schutzmaterial 1 bzw. das Textilmaterial 3 eingesetzte Garn bzw. der diesbezügliche Zwirn und/oder Faden auf Basis von Polyethylen mit ultrahohem Molekulargewicht (UHMW-PE) sollte erfindungsgemäß zudem die folgenden Eigenschaften aufweisen:
- Insbesondere sollte das Garn und/oder der Zwirn und/oder der Faden, insbesondere das Filamentgarn, einen Titer im Bereich von 50 bis 500 dtex, insbesondere 75 bis 450 dtex, vorzugsweise 100 bis 400 dtex, bevorzugt 110 bis 300 dtex, aufweisen.
- Zudem sollte das Garn und/oder der Zwirn und/oder der Faden, insbesondere das Filamentgarn, einen Durchmesser im Bereich von 4 µm bis 250 µm, insbesondere 6 µm bis 200 µm, vorzugsweise 8 µm bis 150 µm, bevorzugt 10 µm bis 100 µm, aufweisen.
- Gleichermaßen sollte das Garn und/oder der Zwirn und/oder der Faden, insbesondere das Filamentgarn, eine Zugfestigkeit im Bereich von 2 N/tex bis 8 N/tex, insbesondere 2,5 N/tex bis 6 N/tex, vorzugsweise 3 N/tex bis 5 N/tex, aufweisen.
- Erfindungsgemäß kann es zudem vorgesehen sein, dass das Garn und/oder der Zwirn und/oder der Faden, insbesondere das Filamentgarn, ein Elastizitätsmodul im Bereich von 50 N/tex bis 300 N/tex, insbesondere 75 N/tex bis 250 N/tex, vorzugsweise 100 N/tex bis 200 N/tex, aufweist.
- Das Garn und/oder der Zwirn und/oder der Faden, insbesondere das Filamentgarn, sollte zudem eine Bruchdehnung im Bereich von 0,5 % bis 10 %, insbesondere 1 % bis 8 %, vorzugsweise 1,5 % bis 6 %, bevorzugt 2 % bis 5 %, besonders bevorzugt 3 % bis 4 %, aufweisen.
- Gleichermaßen sollte das Garn und/oder der Zwirn und/oder der Faden, insbesondere das Filamentgarn, eine Dichte im Bereich von 800 kg/m³ bis 1.200 kg/m³, insbesondere 800 kg/m³ bis 1.200 kg/m³, vorzugsweise 850 kg/m³ bis 1.100 kg/m³, bevorzugt 900 kg/m³ bis 1.050 kg/m³, besonders bevorzugt 950 kg/m³ bis 1.000 kg/m³, aufweisen.
- Zudem sollte das Garn und/oder der Zwirn und/oder der Faden, insbesondere das Filamentgarn, eine Kristallinität im Bereich von 70 % bis 95 %, insbesondere 75 % bis 90 %, vorzugsweise 80 % bis 85 %, aufweisen. Insbesondere sollte das Garn und/oder der Zwirn und/oder der Faden, insbesondere das Filamentgarn, eine Kristallinität von höchstens 95 %, insbesondere höchstens 90 %, vorzugsweise höchstens 85 %, aufweisen. Die Kristallinitätswerte beziehen sich insbesondere auf das zugrundeliegende Polyethylen mit ultrahohem Molekulargewicht (UHMW-PE).

Hinsichtlich der erfindungsgemäß eingesetzten Garne bzw. Zwirne bzw. Fäden auf Basis von Polyethylen mit ultrahohem Molekulargewicht (UHMW-PE) können markt- bzw. handelsübliche Produkte eingesetzt werden. Insbesondere können entsprechende Produkte eingesetzt werden, welche unter der Bezeichnung Dyneema® erhältlich sind. Zudem können auch Produkte eingesetzt werden, welche unter der Bezeichnung SPECTRA® 2000 marktüblich angeboten werden.

Die Ausrüstung des Schutzmaterials 1 bzw. des dem Schutzmaterial 1 zugrundeliegenden Textilmaterials 3 mit speziellen (Material-)Eigenschaften, wie insbesondere antimikrobiellen bzw. biostatischen, hydrophilen, feuerbeständigen und/oder flammbeständigen Eigenschaften, kann auch mittels Aufbringen entsprechender, dem Fachmann hierzu wohlbekannter Substanzen erfolgen, beispielweise mittels Aufsprühen, Tauchverfahren oder dergleichen. Insbesondere kommt auch eine Oberflächenmodifizierung mittels Plasmabehandlung oder dergleichen in Betracht. Beispielweise kann insbesondere auf Basis der vorgenannten Methoden in gezielter Weise das Schutzmaterial 1 bzw. das dem Schutzmaterial 1 zugrundeliegende Textilmaterial 3 auch mit oleophoben und/oder oleophilen Eigenschaften ausgerüstet werden.

Insgesamt können die Eigenschaften des Schutzmaterials 1 bzw. des dem Schutzmaterial 1 zugrundeliegenden Textilmaterials 3 auch durch die Maschenlegung des zugrundeliegenden Gestrickes variiert bzw. maßgeschneidert werden. Insbesondere kann die Garn-, Zwirn- bzw. Fadenstärke erhöht oder ein multiples Garn-, Zwirn- bzw. Fadensystem eingesetzt werden, um beispielsweise die Flächenstruktur weiter zu verdichten. Wie zuvor angeführt, können mehrere Garne, Zwirne bzw. Fäden aus verschiedenen Grundmaterialien eingesetzt werden. Zudem kann auch mit zusätzlichen Plattierfäden gearbeitet werden.

Auf Basis der vorgenannten Maßnahmen können beispielsweise auch die ballistischen Schutzeigenschaften gezielt verbessert werden und zudem das Material beispielsweise mit feuer- bzw. flammhemmenden Eigenschaften ausgerüstet werden.

Erfindungsgemäß ist es von Vorteil, wenn das Schutzmaterial 1 ein Flächengewicht im Bereich von 75 g/m² bis 1.500 g/m², insbesondere 100 g/m² bis 1.000 g/m², vorzugsweise 125 g/m² bis 750 g/m², bevorzugt 150 g/m² bis 500 g/m², aufweist.

Insbesondere sollte das Schutzmaterial 1 nach der Erfindung gasdurchlässig, insbesondere luftdurchlässig, ausgebildet sein. Vorzugsweise sollte das Schutzmaterial 1 eine Luftdurchlässigkeit, bestimmt nach DIN ISO 9237 und bei einem Druck von 200 Pascal, von mindestens 500 l/m²·min, insbesondere mindestens 1.000 l/m²·min, vorzugsweise mindestens 2.000 l/m²·min, bevorzugt mindestens 3.000 l/m²·min, besonders bevorzugt mindestens 4.000 l/m²·min, ganz besonders bevorzugt mindestens 5.000 l/m²·min, aufweisen.

Zudem sollte das Schutzmaterial 1 wasserdampfdurchlässig ausgebildet sein. In diesem Zusammenhang sollte das Schutzmaterial 1 eine Wasserdampfdurchlässigkeit bei 20 °C von mindestens 20 l/m² pro 24 h, insbesondere 30 l/m² pro 24 h, vorzugsweise mindestens 40 l/m² pro 24 h, besonders bevorzugt mindestens 50 l/m² pro 24 h, aufweisen.

Die Wasserdampfdurchlässigkeit kann insbesondere nach der "Methode des umgekehrten Bechers" bzw. "Inverted Cup Method" nach ASTM E 96 und bei 20 °C (zu weiteren Einzelheiten zur Messung der Wasserdampfdurchlässigkeit [Water Vapour Transmission, WVT] vgl. auch McCullough et al. "A comparison of standard methods for measuring water vapour permeability of fabrics" in Meas. Sci. Technol. [Measurements Science and Technology] 14, 1402-1408, August 2003*)* gemessen werden. Hierdurch wird ein besonders hoher Tragekomfort gewährleistet, da Körperschweiß effektiv abtransportiert werden kann.

Zudem sollte das Schutzmaterial 1 einen Wasserdampfdurchgangswiderstand Rₜ unter stationären Bedingungen bei 20 °C von höchstens 20 (m²·Pascal)/Watt, insbesondere höchstens 15 (m²·Pascal)/Watt, vorzugsweise höchstens 10 (m²·Pascal)/Watt, besonders bevorzugt höchstens 5 (m²·Pascal)/Watt, aufweisen. In diesem Zusammenhang kann das Schutzmaterial 1 zudem einen Wasserdampfdurchgangswiderstand Rₜ unter stationären Bedingungen bei 20 °C von höchstens 20 (m²·Pascal)/Watt, insbesondere höchstens 15 (m²·Pascal)/Watt, vorzugsweise höchstens 10 (m²·Pascal)/Watt, besonders bevorzugt höchstens 5 (m²·Pascal)/Watt, aufweisen. Der Wasserdampfdurchgangswiderstand Rₜ kann insbesondere nach DIN EN 31 092:1993 bzw. nach gleichlautender internationaler Norm ISO 11092 vom Februar 1994 ("Textilien - physiologische Wirkungen, Messung des Wärme- und Wasserdampfdurchgangswiderstandes unter stationären Bedingungen (*sweating guarded-hotplate test*)") gemessen werden.

Im Allgemeinen sollte das Schutzmaterial 1 nach der Erfindung eine Dicke im Bereich von 0,05 mm bis 50 mm, insbesondere 0,1 mm bis 25 mm, vorzugsweise 0,2 mm bis 15 mm, bevorzugt 0,3 mm bis 10 mm, besonders bevorzugt 0,4 mm bis 5 mm, ganz besonders bevorzugt 0,5 mm bis 3 mm, aufweisen. Erfindungsgemäß kann die Größe bzw. Fläche des Schutzmaterials 1 nach der Erfindung in großen Bereichen variieren, insbesondere im Hinblick auf bzw. im Rahmen der Anpassung an den zu schützenden Gegenstand 2 bzw. das zu schützende Objekt. Insbesondere kann das Schutzmaterial 1 eine Fläche bzw. eine Erstreckung, bezogen auf die Haupterstreckungsebene des Schutzmaterials 1, im Bereich von 0,001 m² bis 200 m², insbesondere 0,005 m² bis 150 m², vorzugsweise 0,01 m² bis 100 m², bevorzugt 0,05 m² bis 50 m², besonders bevorzugt 0,1 m² bis 20 m², aufweisen.

Das Schutzmaterial 1 nach der Erfindung bzw. das hierzu eingesetzte Textilmaterial 3, insbesondere das Textilmaterial 3, kann zudem, auf zumindest einer (Haupt-)-Fläche des Schutzmaterials 1, insbesondere des flächigen und/oder zweidimensionalen Textilmaterials 3, rippenförmige Erhebungen, vorzugsweise Längsrippen, aufweisen. Dabei können die rippenförmigen Erhebungen, insbesondere die Längsrippen, zumindest im Wesentlichen geradlinig und/oder parallel zueinander verlaufen und/oder angeordnet sein. Die Ausbildung der rippenförmigen Erhebung erfolgt dabei insbesondere im Rahmen der Herstellung des Schutzmaterials bzw. Textilmaterials 3 auf Basis einer speziellen Maschenlegung. Die entsprechenden Herstellungsverfahren sind dem Fachmann wohlbekannt, so dass es diesbezüglich keiner weiteren Ausführungen bedarf.

Was das erfindungsgemäße Schutzmaterial 1 bzw. das hierzu eingesetzte Textilmaterial 3 zudem anbelangt, so weist dieses weitere positive Eigenschaften auf, welche auch der dauerhaften Bereitstellung einer effektiven Splitterschutzfunktion bzw. eines ergänzenden Stich- bzw. Schnittschutzes sowie Stoßschutzes zuträglich sind: So weist das Schutzmaterial 1 bzw. das Textilmaterial 3 insgesamt hydrophile Eigenschaften auf, so dass im Zusammenhang mit der zuvor angeführten hohen Luft- bzw. Wasserdampfdurchlässigkeit in effektiver Weise Feuchtigkeit von einem zu schützenden Gegenstand abtransportiert werden kann, was beispielsweise auch in Bezug auf elektronische Geräte von Vorteil ist. Zudem sind die zugrundeliegenden Materialien antimikrobiell bzw. biostatisch nach ASTM E-2149-C sowie schweißecht gemäß DIN EN ISO 105 E04. Darüber hinaus sind die Materialien zumindest im Wesentlichen inert gegenüber Ammoniak. Weiterhin weisen die erfindungsgemäß eingesetzten Materialien eine hohe Waschbarkeit auf, wobei auch nach 20 Waschzyklen bei einer Temperatur von 60 °C keine nennenswerte Beeinträchtigung des Materials vorliegt. Darüber hinaus weisen die Materialien auch kurze Trocknungsphasen bzw. -zeiten auf. Zudem sind die Materialien insgesamt temperatur- bzw. wärmestabil, wobei auch nach Lagerung bei 70 °C für 24 Stunden keine nachhaltige Beeinträchtigung der Materialeigenschaften vorliegt.

Aufgrund der hervorragenden Eigenschaften der für das Schutzmaterial 1 bzw. für das Textilmaterial 3 eingesetzten Materialien ist es - im grundlegenden Gegensatz zum Stand der Technik, bei welchem zur Gewährleistung einer gewissen Schutzfunktion maßgeblich Para-Aramide eingesetzt werden - nicht erforderlich, die die Schutzfunktion bereitstellenden Materialien in luft- bzw. wasserundurchlässige bzw. UV-undurchlässige Folien einzubringen bzw. einzuschweißen. Die erfindungsgemäß eingesetzten Materialien weisen demgegenüber hervorragende Eigenschaften auf, insbesondere auch was die Luftdurchlässigkeit und Hydrophilie der Materialien sowie die große Haltbarkeit und chemische Beständigkeit der Materialien anbelangt.

Wie in Fig. 1A dargestellt, kann das Schutzmaterial 1 nach der Erfindung insbesondere in Bezug auf das Textilmaterial 3 zumindest abschnittsweise, vorzugsweise vollständig und/oder vollflächig, einlagig ausgebildet sein. In diesem Zusammenhang kann das Schutzmaterial 1 eine Lage des flächigen bzw. zweidimensionalen Textilmaterials 3 aufweisen.

Wie darüber hinaus in Fig. 1B dargestellt, kann es erfindungsgemäß auch vorgesehen sein, dass das Schutzmaterial 1 zumindest abschnittsweise, vorzugsweise vollständig bzw. vollflächig, mehrlagig und/oder als Laminat ausgebildet ist. In diesem Zusammenhang kann das Schutzmaterial 1 eine Mehrzahl an Lagen, insbesondere zwei, drei, vier, fünf, sechs, sieben, acht oder mehr Lagen, des flächigen und/oder zweidimensionalen Textilmaterials 3 aufweisen. Diesbezüglich können die jeweiligen Lagen auf Basis des Textilmaterials 3 unterschiedlich ausgebildet sein, beispielsweise was die Materialdicke oder dergleichen anbelangt. Durch die gezielte Verwendung von insbesondere abschnittsweise mehrlagigen Strukturen kann eine gezielte Erhöhung der Schutzfunktion insbesondere in Bezug auf besonders gefährdete Bereiche eines zu schützenden Gegenstands individuell angepasst bzw. erhöht werden.

Insbesondere kann es dabei vorgesehen sein, dass die jeweiligen Lagen des flächigen bzw. zweidimensionalen Textilmaterials 3 stapelförmig bzw. planparallel zueinander angeordnet sind.

In diesem Zusammenhang können die jeweiligen Lagen des Textilmaterials 3 lose aufeinander gestapelt sein. Erfindungsgemäß ist es jedoch von Vorteil, wenn zumindest ein Teil der Lagen, vorzugsweise sämtliche Lagen, des Textilmaterials 3 miteinander verbunden sind. Diesbezüglich kommt insbesondere eine randseitige Verbindung in Betracht. Die Verbindung der jeweiligen Lagen des Textilmaterials 3 kann dabei in dem Fachmann an sich bekannter Art und Weise erfolgen, beispielsweise durch Vernähen, Verschweißen, Vertackern, Verkleben, Laminieren oder dergleichen, bevorzugt durch Vernähen, beispielsweise in Form von Flachnähten oder dergleichen. Hierzu kann es vorgesehen sein, dass die Lagen des Textilmaterials 3 insbesondere randseitig bzw. linienförmig entlang der (Haupt-)Flächen der jeweiligen Lage miteinander verbunden, insbesondere vernäht, sind.

Weiterhin kann es im Rahmen der vorliegenden Erfindung vorgesehen sein, dass das Schutzmaterial 1 zumindest zwei insbesondere aufeinanderfolgende Lagen des flächigen und/oder zweidimensionalen Textilmaterials 3, bezogen auf die (Haupt-)Flächen der jeweiligen Lagen und/oder bezogen auf die Ausrichtung der dem flächigen und/oder zweidimensionalen Textilmaterial 3 zugrundeliegenden Maschen und/oder Ketten und/oder Schüssen und/oder bezogen auf die rippenförmigen Erhebungen der jeweiligen Lagen des flächigen und/oder zweidimensionalen Textilmaterials 3, zueinander verdreht ausgerichtet und/oder angeordnet sind, insbesondere mit einem Winkel im Bereich von 45° bis 90°, vorzugsweise mit einem Winkel von etwa 90°. In diesem Zusammenhang ist somit eine Anordnung der jeweiligen Lagen "über Kreuz" im Hinblick auf den Verlauf der Maschen (beispielsweise in Form von Maschenreihen bei einer Kettenwirkware) bzw. der zuvor beschriebenen rippenförmigen Erhebungen in dem Textilmaterial 3 besonders vorteilhaft. Hierdurch wird die Funktion hinsichtlich der Bereitstellung insbesondere eines Splitterschutzes weiterführend verbessert.

Erfindungsgemäß kann es zudem vorgesehen sein, dass das Schutzmaterial 1 mindestens ein Abdeckmaterial 4 bzw. eine Abdeckschicht 4, bevorzugt in Form eines textilen Flächenmaterials, aufweist, insbesondere wobei das Abdeckmaterial 4 im Anwendungszustand auf der dem Gegenstand 2 abgewandten Seite angeordnet ist.

Insbesondere kann auch eine beidseitige Anordnung eines Abdeckmaterials 4, unabhängig voneinander, in Bezug auf das Schutzmaterial 1 nach der Erfindung realisiert werden. Hierdurch kann das Schutzmaterial 1 nach der Erfindung mit weiteren Eigenschaften ausgebildet werden. Insbesondere kann das Abdeckmaterial 4 in Form einer Tarnung ausgebildet sein, so dass das Schutzmaterial 1 neben der zuvor beschriebenen Schutzfunktion auch eine entsprechende Tarnfunktion aufweist. Hierzu kann auch auf Fig. 1A bzw. 1B verwiesen werden.

Gemäß einer erfindungsgemäßen Ausführungsform kann es dabei vorgesehen sein, dass das Abdeckmaterial 4 als Gewebe, Gewirke, Gestricke, Gelege oder Textilverbundstoff, insbesondere als Gewebe, Gewirke oder Gestricke, ausgebildet ist. In diesem Zusammenhang kann es vorgesehen sein, dass das Abdeckmaterial 4 ein Flächengewicht im Bereich von 50 g/m² bis 500 g/m², insbesondere 75 g/m² bis 300 g/m², vorzugsweise 100 g/m² bis 300 g/m², aufweist. Gleichermaßen kann es vorgesehen sein, dass das Abdeckmaterial 4 gasdurchlässig, insbesondere luftdurchlässig, und/oder wasserdampfdurchlässig ausgebildet ist.

Beispielsweise kann das Abdeckmaterial 4 feuerbeständig bzw. flammbeständig ausgebildet sein. In diesem Zusammenhang kann das Abdeckmaterial 4 mindestens ein feuerbeständiges bzw. flammbeständiges Material, insbesondere in Form oder als Bestandteil eines Garns und/oder Zwirns und/oder Fadens, vorzugsweise Filamentgarns, aufweisen. In diesem Zusammenhang kann das feuerbeständige bzw. flammbeständige Material mindestens ein Aramid, insbesondere Meta-Aramid, sein. Insbesondere kann der Gehalt an feuerbeständigem und/oder flammbeständigem Material im Bereich von 1 Gew.-% bis 100 Gew.-%, insbesondere 2 Gew.-% bis 90 Gew.-%, vorzugsweise 5 Gew.-% bis 80 Gew.-%, bevorzugt 10 Gew.-% bis 60 Gew.-%, bezogen auf das Abdeckmaterial 4, liegen.

Gemäß einer weiteren erfindungsgemäßen Ausführungsform der vorliegenden Erfindung kann es vorgesehen sein, dass Schutzmaterial 1 mindestens ein (zusätzliches) Splitterschutzelement 5 aufweist bzw. hiermit ausgerüstet ist. In diesem Zusammenhang kann das Splitterschutzelement 5 fest bzw. dauerhaft (permanent) mit dem Schutzmaterial 1 verbunden sein, insbesondere vernäht, verschweißt, laminiert und/oder verklebt sein. Erfindungsgemäß kann es auch vorgesehen sein, dass das Splitterschutzelement 5 lösbar und/oder herausnehmbar und/oder abnehmbar mit dem Schutzmaterial 1 verbunden ist. Hierzu kann auch auf Fig. 3C verwiesen werden. Grundsätzlich kann das Splitterschutzelement 5 von den ausgewählten Materialien und vom Aufbau dem erfindungsgemäßen Splitterschutz 1 bzw. dem Textilmaterial 3 entsprechen, so dass auch auf obige Ausführungen verwiesen werden kann. Insbesondere kann die Splitterschutzschicht 5 mindestens ein dem zuvor für das Schutzmaterial 1 angeführten Textilmaterial 3 entsprechendes flächiges bzw. zweidimensionales Textilmaterial 3' aufweisen. Zudem kann die Splitterschutzschicht 5 mindestens ein dem zuvor für das Schutzmaterial 1 angeführten Abdeckmaterial 4 entsprechendes Abdeckmaterial 4' aufweisen. Hierzu kann insbesondere auf Fig. 1C verwiesen werden.

Durch den gezielten Einsatz von zusätzlichen Splitterschutzelementen, welche gleichermaßen die dem Schutzmaterial 1 nach der Erfindung zugrundeliegende Schutzfunktion auf Basis eines Splitter-, Stich-, Schnitt-, Schuss- und/oder Stoßschutzes aufweisen, kann die Schutzfunktion des erfindungsgemäßen Schussmaterials gezielt angepasst bzw. erhöht werden. Somit ist es erfindungsgemäß möglich, durch den gezielten Einsatz von zusätzlichen Splitterschutzelementen, ausgehend von einem Basisschutz, anhand dessen sozusagen ein Grundschutz bereitgestellt wird, einen ergänzenden, das Gesamtschutzniveau insgesamt erhöhenden Zusatzschutz insbesondere auf Basis individuell in bzw. an das erfindungsgemäße Schutzmaterial 1 anbringbaren bzw. einbringbaren ergänzenden Splitterschutzelementen 5 bereitzustellen. Auf dieser Basis können beispielsweise besonders gefährdete Bereiche des zu schützenden Gegenstands bzw. Objekts zusätzlich geschützt werden (beispielsweise Fenster von Transportfahrzeugen oder Personentransportbereichen von Fahrzeugen (vgl. Fig. 3C)). Das erfindungsgemäß eingesetzte Splitterschutzelement weist grundsätzlich zu dem Schutzmaterial 1 nach der Erfindung vergleichbare Eigenschaften auf. Insbesondere weist das Splitterschutzelement auch einen Splitter-, Stich-, Schnitt-, Schuss- und/oder Stoßschutz und somit eine Splitter-, Stich-, Schnitt-, Schuss- und/oder Stoßschutzfunktion auf.

Im Rahmen der vorliegenden Erfindung kann es dabei vorgesehen sein, dass das Schutzmaterial 1 mindestens eine Aufnahmevorrichtung 6, insbesondere eine Aufnahmetasche bzw. -kammer, vorzugsweise mindestens eine Einschubtasche bzw. -kammer, vorzugweise zur Aufnahme mindestens eines Splitterschutzelements 5, insbesondere wie zuvor definiert, aufweist (vgl. Fig. 3C). Insbesondere kann das Splitterschutzelement 5 in die Aufnahmevorrichtung 6, insbesondere in die Aufnahmetasche, einbringbar bzw. unterbringbar ausgebildet sein. Hierdurch kann eine gezielte Anordnung des Splitterschutzelements 5 in bzw. an dem Schutzmaterial 1 nach der Erfindung vorgenommen werden. Diesbezüglich kann beispielsweise auf Fig. 3C verwiesen werden. Was die Aufnahmevorrichtung 6 des Schutzmaterials anbelangt, so kann diese beispielsweise durch ein textiles Flächenmaterial, insbesondere wie zuvor definiert, bereitgestellt werden. Bei insbesondere mehrlagiger Ausgestaltung des Schutzmaterials 1 kann die Tasche auch auf Basis einer Öffnung zwischen den jeweiligen Lagen des Schutzmaterials 1, insbesondere im Zusammenhang mit einer die Aufnahmevorrichtung begrenzenden Verbindung der jeweiligen Lagen, bereitgestellt werden.

Was das Splitterschutzelement 5 weiterhin anbelangt, so kann dieses ein flächiges bzw. zweidimensionales Textilmaterial 3', insbesondere wie zuvor für das Textilmaterial 3 definiert, aufweisen.

Insbesondere kann es erfindungsgemäß vorgesehen sein, dass das Splitterschutzelement 5 einlagig ausgebildet ist.

Gleichermaßen kann es erfindungsgemäß gemäß einer alternativen Ausführungsform auch vorgesehen sein, dass das Splitterschutzelement 5 mehrlagig und/oder als Laminat ausgebildet ist, insbesondere wobei das Splitterschutzelement 5 eine Mehrzahl an Lagen, insbesondere zwei, drei, vier, fünf, sechs, sieben, acht oder mehr Lagen, des flächigen und/oder zweidimensionalen Textilmaterials 3' aufweist.

In diesem Zusammenhang kann es auch vorgesehen sein, dass die jeweiligen Lagen des flächigen und/oder zweidimensionalen Textilmaterials 3' stapelförmig und/oder planparallel zueinander angeordnet sind und/oder wobei die Lagen des flächigen und/oder zweidimensionalen Textilmaterials 3' insbesondere randseitig und/oder linienförmig entlang der (Haupt-)Flächen der jeweiligen Lagen miteinander verbunden, insbesondere vernäht und/oder verklebt, sind.

Weiterhin kann es erfindungsgemäß auch vorgesehen sein, dass zumindest zwei insbesondere aufeinanderfolgende Lagen des flächigen und/oder zweidimensionalen Textilmaterials 3', bezogen auf die (Haupt-)Flächen der jeweiligen Lagen und/oder bezogen auf die Ausrichtung der dem flächigen und/oder zweidimensionalen Textilmaterial 3' zugrundeliegenden Maschen und/oder bezogen auf die rippenförmigen Erhebungen der jeweiligen Lagen des flächigen und/oder zweidimensionalen Textilmaterials 3', zueinander verdreht ausgerichtet und/oder angeordnet sind, insbesondere mit einem Winkel im Bereich von 45° bis 90°, vorzugsweise mit einem Winkel von etwa 90°.

Zudem kann das Splitterschutzelement mindestens ein Abdeckmaterial 4' bzw. eine Abdeckschicht 4' aufweisen, insbesondere wie zuvor für die Abdeckschicht 4 des Schutzmaterials 1 definiert.

Zur Ausbildung des erfindungsgemäßen Schutzmaterials 1 kann es zudem vorgesehen sein, dass das Schutzmaterial 1 mit einem chemische Gift- und/oder Kampfstoffe adsorbierenden Adsorbens, insbesondere einem Material auf Basis von Aktivkohle, vorzugsweise in Form von Aktivkohleteilchen in Kornform ("Kornkohle") oder Kugelform ("Kugelkohle"), beaufschlagt und/oder ausgerüstet ist. Hierzu kann das Adsorbens mittels eines insbesondere diskontinuierlich, vorzugsweise punktförmig aufgetragenen Klebstoffs an das Schutzmaterial 1 und/oder dem textilen Flächenmaterial 3 und/oder dem Abdeckmaterial 4 fixiert sein. Entsprechendes gilt für das Splitterschutzelement 5 bzw. die Splitterschutzschicht 5.

Der mittlere Durchmesser der Adsorbenspartikel, insbesondere der Aktivkohleteilchen, beträgt vorzugsweise 0,01 bis 2 mm, vorzugsweise 0,05 bis 1 mm, bevorzugt 0,05 bis 0,5 mm. Die entsprechenden Teilchengrößen können insbesondere auf Basis der Methode nach ASTM D2862-97/04 bestimmt werden. Zudem können die vorgenannten Größen mit Bestimmungsmethoden auf Basis einer Siebanalyse, auf Basis von Röntgenbeugung, Laserdiffraktometrie oder dergleichen bestimmt werden. Die jeweiligen Bestimmungsmethoden sind dem Fachmann als solche wohlbekannt, so dass es diesbezüglich keiner weiteren Ausführungen bedarf.

Erfindungsgemäß hat es sich weiterhin als vorteilhaft erwiesen, wenn die Adsorbenspartikel, insbesondere die Aktivkohleteilchen, in einer Menge im Bereich von 20 bis 250 g/m², insbesondere 20 bis 180 g/m², vorzugsweise 30 bis 130 g/m², eingesetzt werden.

Was die erfindungsgemäß eingesetzte Aktivkohle darüber hinaus anbelangt, so kann diese im Allgemeinen erhältlich sein durch Carbonisierung und nachfolgende Aktivierung eines synthetischen und/oder nicht naturstoffbasierten Ausgangsmaterials, insbesondere auf Basis organischer Polymere. Im Rahmen der vorliegenden Erfindung hat es sich als besonders vorteilhaft erwiesen, wenn erfindungsgemäß eine Aktivkohle auf Basis eines sehr speziellen Ausgangsmaterials eingesetzt wird: So kann gemäß einer besonders bevorzugten Ausführungsform die erfindungsgemäß eingesetzte Aktivkohle aus einem Ausgangsmaterial auf Basis organischer Polymere, insbesondere auf Basis sulfonierter organischer Polymere, vorzugsweise auf Basis von divinylbenzolvernetztem Polystyrol, bevorzugt auf Basis von Styrol/Divinylbenzol-Copolymeren, erhalten werden.

Was die erfindungsgemäß in besonders bevorzugter Weise eingesetzte Aktivkohle, welche durch Carbonisierung und nachfolgende Aktivierung des Ausgangsmaterials auf Basis organischer Polymere erhalten wird, anbelangt, so kann es erfindungsgemäß vorgesehen sein, dass der Gehalt an Divinylbenzol in dem Ausgangsmaterial im Bereich von 1 Gew.-% bis 20 Gew.-%, insbesondere 1 Gew.-% bis 15 Gew.-%, vorzugsweise 1,5 Gew.-% bis 12,5 Gew.-%, bevorzugt 2 Gew.-% bis 10 Gew.-%, bezogen auf das Ausgangsmaterial, liegt.

Zudem kann es erfindungsgemäß in diesem Zusammenhang vorgesehen sein, dass das Ausgangsmaterial ein insbesondere sulfoniertes und/oder Sulfonsäuregruppen enthaltendes lonenaustauscherharz, insbesondere vom Geltyp, ist.

Insbesondere kann es erfindungsgemäß vorgesehen sein, dass Aktivkohle eine polymerbasierte sphärische Aktivkohle (PBSAC; *Polymer-based Spherical Activated Carbon*) eingesetzt wird. Insbesondere kann die Aktivkohle eine polymerbasierte sphärische Aktivkohle (PBSAC) sein.

Die eingesetzte Aktivkohle kann dabei grundsätzlich nach bekannten Verfahren des Standes der Technik erhalten werden: Insbesondere werden zu diesem Zweck kugelförmige sulfonierte organische Polymere, insbesondere auf Basis von divinylbenzolvernetztem Polystyrol, carbonisiert und anschließend zu der betreffenden Aktivkohle aktiviert, insbesondere wie zuvor angeführt. Für weitergehende diesbezügliche Einzelheiten kann beispielsweise auf die Druckschriften DE 43 28 219 A1, DE 43 04 026 A1, DE 196 00 237 A1 sowie EP 1 918 022 A1 bzw. auf die parallele, zu derselben Patentfamilie gehörende US 7,737,038 B2 verwiesen werden, deren jeweiliger Inhalt hiermit durch Bezugnahme vollumfänglich eingeschlossen ist.

Im Rahmen der vorliegenden Erfindung zum Einsatz kommende Aktivkohlen sind im Allgemeinen kommerziell erhältlich bzw. handelsüblich. Insbesondere können Aktivkohlen zum Einsatz kommen, welche beispielsweise von der Blücher GmbH, Erkrath, Deutschland, oder von der AdsorTech GmbH, Premnitz, Deutschland, vertrieben werden.

Was die im Rahmen der vorliegenden Erfindung verwendete bzw. eingesetzte Aktivkohle als solche anbelangt, so werden die vorliegend aufgeführten Parameterangaben bezüglich der zugrundeliegenden Aktivkohle mit genormten oder explizit angegebenen Bestimmungsverfahren oder mit dem Fachmann an sich geläufigen Bestimmungsmethoden bestimmt. Insbesondere die Parameterangaben betreffend die Charakterisierung der Porosität der Porengrößenverteilung und andere Adsorptionseigenschaften ergeben sich im Allgemeinen jeweils aus den entsprechenden Stickstoffsorptionsisothermen der betreffenden Aktivkohle bzw. der vermessenen Produkte. Zudem kann die Porenverteilung, insbesondere auch im Hinblick auf den Gehalt an Mikroporen in Bezug auf das Gesamtporenvolumen, auf Basis der DIN 66135-1 bestimmt werden.

Im Rahmen der vorliegenden Erfindung hat es sich zudem als vorteilhaft erwiesen, wenn die erfindungsgemäß eingesetzte Aktivkohle ein weiterführend spezifiziertes Gesamtporenvolumen, insbesondere ein Gesamtporenvolumen nach Gurvich, aufweist, wie im Folgenden angeführt.

So kann es erfindungsgemäß vorgesehen sein, dass die Aktivkohle ein Gesamtporenvolumen, insbesondere ein Gesamtporenvolumen nach Gurvich, im Bereich von 0,3 cm³/g bis 3,8 cm³/g, insbesondere 0,4 cm³/g bis 3,5 cm³/g, vorzugsweise 0,5 cm³/g bis 3 cm³/g, besonders bevorzugt 0,6 cm³/g bis 2,5 cm³/g, ganz besonders bevorzugt 0,5 cm³/g bis 1,5 cm³/g, aufweist.

Was die Bestimmung des Gesamtporenvolumens nach Gurvich anbelangt, so handelt es sich um eine dem Fachmann auf diesem Gebiet an sich wohlbekannte Mess-/Bestimmungsmethode. Zu weitergehenden Einzelheiten bezüglich der Bestimmung des Gesamtporenvolumens nach Gurvich kann beispielsweise verwiesen werden auf *L. Gurvich (1915), J. Phys. Chem. Soc. Russ. 47,* 805, sowie auf *S. Lowell et al.,* Characterization of Porous Solids and Powders: Surface Area Pore *Size and Density, Kluwer Academic Publishers, Article Technology Series, Seiten 111 ff.* Insbesondere kann das Porenvolumen der Aktivkohle auf Basis der Gurvich-Regel gemäß der Formel V_{P} = Wₐ / ρₗ bestimmt werden, wobei Wₐ die adsorbierte Menge eines zugrundeliegenden Adsorbats und ρₗ die Dichte des eingesetzten Adsorbats darstellt (vgl. auch Formel (8.20) gemäß Seite 111, Kapitel 8.4.) von S. Lowell et al.).

Erfindungsgemäß kann es insbesondere vorgesehen sein, dass mindestens 65 %, insbesondere mindestens 70 %, vorzugsweise mindestens 75 %, bevorzugt mindestens 80 %, des Gesamtporenvolumens, insbesondere des Gesamtporenvolumens nach Gurvich, der Aktivkohle durch Poren mit Porendurchmessern von höchstens 50 nm, insbesondere durch Mikro- und/oder Mesoporen, gebildet werden.

Insbesondere kann es erfindungsgemäß gleichermaßen vorgesehen sein, dass 50 % bis 95 %, insbesondere 60 % bis 90 %, vorzugsweise 70 % bis 85 %, des Gesamtporenvolumens, insbesondere des Gesamtporenvolumens nach Gurvich, der Aktivkohle durch Poren mit Porendurchmessern von höchstens 50 nm, insbesondere durch Mikro- und/oder Mesoporen, gebildet werden.

Insbesondere kann es erfindungsgemäß vorgesehen sein, dass 1 % bis 60 %, insbesondere 5 % bis 50 %, vorzugsweise 10 % bis 40 %, bevorzugt 15 % bis 35 %, des Gesamtporenvolumens, insbesondere des Gesamtporenvolumens nach Gurvich, der Aktivkohle durch Poren mit Porendurchmessern von mehr als 2 nm, insbesondere durch Meso- und/oder Makroporen, gebildet werden.

Insbesondere kann die Aktivkohle ein durch Poren mit Porendurchmessern von höchstens 2 nm (d.h. ≤ 2 nm) gebildetes Porenvolumen, insbesondere Mikroporenvolumen nach Carbon Black, im Bereich von 0,05 cm³/g bis 2,5 cm³/g, insbesondere 0,15 cm³/g bis 2 cm³/g, vorzugsweise 0,3 cm³/g bis 1,5 cm³/g, aufweist, insbesondere wobei 15 % bis 98 %, insbesondere 25 % bis 95 %, vorzugsweise 35 % bis 90 %, des Gesamtporenvolumens der Aktivkohle durch Poren mit Porendurchmessern von höchstens 2 nm, insbesondere durch Mikroporen, gebildet werden.

Die Bestimmungsmethode nach Carbon Black ist dem Fachmann an sich bekannt, wobei zudem für weitergehende Einzelheiten zur Bestimmung der Porenoberfläche und des Porenvolumens nach Carbon Black beispielsweise verwiesen werden kann auf R. W. Magee, Evaluation ofthe External Surface Area of Carbon Black by Nitrogen Adsorption, Presented at the Meeting ofthe Rubber Division ofthe American Chem. Soc., October 1994*,* z. B. referiert in: Quantachrome Instruments, AU-TOSORB-1, AS1 WinVersion 1.50, Operating Manual, OM, 05061, Quantachrome Instruments 2004, Florida, USA, Seiten 71 ff*.* Insbesondere kann die diesbezügliche Auswertung mittels *t-plot-method* erfolgen.

Zudem kann die Aktivkohle eine spezifische BET-Oberfläche im Bereich von 600 m²/g bis 4.000 m²/g, insbesondere 800 m²/g bis 3.500 m²/g, vorzugsweise 1.000 m²/g bis 3.000 m²/g, besonders bevorzugt 1.200 m²/g bis 2.750 m²/g, ganz besonders bevorzugt 1.300 m²/g bis 2.500 m²/g, aufweisen.

Die Bestimmung der spezifischen Oberfläche gemäß BET ist dem Fachmann grundsätzlich als solche bekannt, so dass diesbezüglich keine weitergehenden Einzelheiten ausgeführt zu werden brauchen. Sämtliche BET-Oberflächenangaben beziehen sich auf die Bestimmung gemäß ASTM D6556-04. Im Rahmen der vorliegenden Erfindung wird zur Bestimmung der BET-Oberfläche - im Allgemeinen und sofern nicht ausdrücklich abweichend angegeben - die so genannte Multi-Point-BET-Bestimmungsmethode (MP-BET) in einem Partialdruckbereich p/p₀ von 0,05 bis 0,1 angewendet.

Für weitergehende Einzelheiten zu der Bestimmung der BET-Oberfläche bzw. zu der BET-Methode kann auf die vorgenannte ASTM D6556-04 sowie auf Römpp Chemielexikon, 10. Auflage, Georg Thieme Verlag, Stuttgart/New York, Stichwort: "BET-Methode", einschließlich der dort referierten Literatur, und auf Winnacker-Küchler (3. Auflage), Band 7, Seiten 93 ff. sowie auf Z. Anal. Chem. 238, Seiten 187 bis 193 (1968), verwiesen werden.

Im Rahmen der vorliegenden Erfindung bezeichnet der Begriff "Mikroporen" solche Poren mit Porendurchmessern von weniger als 2 nm, wohingegen der Begriff "Mesoporen" solche Poren mit Porendurchmessern im Bereich von 2 nm (d.h. 2 nm einschließlich) bis 50 nm einschließlich bezeichnet und der Begriff "Makroporen" solche Poren mit Porendurchmessern von mehr als 50 nm (d.h. > 50 nm) bezeichnet.

Insbesondere kann die Aktivkohle eine durch Poren mit Porendurchmessern von höchstens 2 nm, insbesondere durch Mikroporen, gebildete Oberfläche im Bereich von 400 bis 3.500 m²/g, insbesondere 500 bis 3.000 m²/g, vorzugsweise 600 bis 2.500 m²/g, bevorzugt 700 bis 2.000 m²/g, aufweisen.

Insbesondere kann die Aktivkohle eine durch Poren mit Porendurchmessern im Bereich von 2 nm bis 50 nm, insbesondere durch Mesoporen, gebildete Oberfläche im Bereich von 200 bis 2.000 m²/g, insbesondere 300 bis 1.900 m²/g, vorzugsweise 400 bis 1.800 m²/g, bevorzugt 500 bis 1.700 m²/g, aufweisen.

Insbesondere kann die Aktivkohle einen mittleren Porendurchmesser im Bereich von 0,1 nm bis 55 nm, insbesondere 0,2 nm bis 50 nm, vorzugsweise 0,5 nm bis 45 nm, bevorzugt 1 nm bis 40 nm, aufweisen.

Durch den zweckgerichteten Einsatz eines Adsorptionsmaterials insbesondere in Form von Aktivkohle kann das erfindungsgemäße Schutzmaterial über den erfindungsgemäß bereitgestellten Splitter-, Stich-, Schnitt-, Schuss- bzw. Stoßschutz hinaus mit adsorptiven Eigenschaften versehen werden, insbesondere im Hinblick auf die Adsorption von chemischen Gift- bzw. Kampfstoffen, so dass hierdurch insgesamt ein Schutzmaterial mit mehrfachem Schutz (Splitterschutz und Schutz gegenüber Gift- bzw. Kampfstoffen) bereitgestellt wird. Auf diese Weise wird eine Kontamination der zu schützende Gegenstände entsprechend verhindert.

Weiterer Gegenstand der vorliegenden Erfindung - gemäß einem **weiteren** Aspekt der vorliegenden Erfindung - ist zudem die Verwendung eines textilen Schutzmaterials nach der Erfindung, wie es zuvor definiert wurde, zur Bereitstellung und/oder Erhöhung eines Splitter-, Stich-, Schnitt-, Schuss- und/oder Stoßschutzes von Gegenständen bzw. zur Ausrüstung von Gegenständen mit einem Splitter-, Stich-, Schnitt-, Schuss- und/oder Stoßschutz, vorzugsweise zum Schutz und/oder zur Abdeckung oder Bedeckung und/oder Auskleidung von Gegenständen.

In diesem Zusammenhang kann die erfindungsgemäße Verwendung somit zur Bereitstellung bzw. Ausrüstung bzw. Erhöhung einer Schutzfunktion von Gegenständen bzw. des Schutzes von Gegenständen ausgerichtet sein.

Insbesondere kann die erfindungsgemäße Verwendung zur Bereitstellung und/oder Ausrüstung und/oder Erhöhung einer Schutzfunktion gegenüber durch Detonation und/oder Explosion hervorgerufenen und/oder freigesetzten Splittern vorgesehen sein. Was die erfindungsgemäße Verwendung weiterhin anbelangt, so kann es im Rahmen der vorliegenden Erfindung vorgesehen sein, dass das Schutzmaterial zwischen dem Gegenstand einerseits und dem Detonations- und/oder Explosionsort angeordnet wird. Zudem kann das Schutzmaterial im Anwendungszustand sich über den Gegenstand erstrecken bzw. den Gegenstand zumindest teilweise bedecken bzw. den Gegenstand zumindest teilweise auskleiden.

Zudem ist weiterer Gegenstand der vorliegenden Erfindung - gemäß einem **weiteren** Aspekt der vorliegenden Erfindung - ein Verfahren zur Bereitstellung und/oder Erhöhung eines Splitter-, Stich-, Schnitt-, Schuss- und/oder Stoßschutzes von mindestens einem Gegenstands und/oder zur Ausrüstung mindestens eines Gegenstands mit einem Splitter-, Stich-, Schnitt-, Schuss- und/oder Stoßschutz, wobei mindestens ein Schutzmaterial, wie zuvor definiert, zwischen dem Gegenstand einerseits und dem Detonations- und/oder Explosionsort angeordnet wird und/oder wobei das Schutzmaterial im Anwendungszustand sich über den Gegenstand erstreckend und/oder den Gegenstand zumindest teilweise bedeckend und/oder den Gegenstand zumindest teilweise auskleidend angeordnet wird.

Somit zielt das erfindungsgemäße Verfahren auf eine gezielte Erhöhung der Schutzfunktion bei Gegenständen bzw. des Schutzes von Gegenständen gegenüber durch Detonation bzw. Explosion hervorgerufenen und/oder freigesetzten Splittern bzw. zur Erhöhung des Splitter-, Stich-, Schnitt-, Schuss- bzw. Stoßschutzes von Gegenständen.

Schließlich ist weiterer Gegenstand der vorliegenden Erfindung - gemäß einem **weiteren** Aspekt der vorliegenden Erfindung - die erfindungsgemäße Schutzmaterialeinheit 7, wobei die Schutzmaterialeinheit 7 mindestens ein Schutzmaterial 1, insbesondere wie zuvor definiert, und mindestens einen mit dem Schutzmaterial 1 ausgerüsteten bzw. mit dem Schutzmaterial 1 zumindest teilweise bedeckten Gegenstand 1 und/oder mit dem Schutzmaterial 1 zumindest teilweise ausgekleideten Gegenstand 1 umfasst. Hierzu kann insbesondere auf Fig. 4B verwiesen werden.

Weitere Ausgestaltungen, Abwandlungen, Variationen, Modifikationen, Besonderheiten und Vorteile der vorliegenden Erfindung sind für den Fachmann beim Lesen der Beschreibung ohne Weiteres erkennbar und realisierbar, ohne dass er dabei den Rahmen der vorliegenden Erfindung verlässt.

Die vorliegende Erfindung wird anhand der nachfolgenden Ausführungsbeispiele veranschaulicht, welche die vorliegende Erfindung jedoch keinesfalls beschränken sollen.

### AUSFÜHRUNGSBEISPIELE:

(i) Die ballistische Schutzfunktion bzw. die ballistische Haltefähigkeit der im vorliegenden Untersuchungskomplex getesteten Schutzmaterialien wird anhand der Ballistikschutzwerte V₅₀, gemessen nach STANAG 2920 (RCC 0,13 g, mit RCC = *Right Circular Cylinder*), bestimmt. Dabei bedeuten höhere V₅₀-Werte eine bessere ballistische Schutzfunktion bzw. Haltefähigkeit der untersuchten Schutzmaterialien.

Die Schutzmaterialien liegen dabei jeweils als textile Maschenware vor, wobei zum einen erfindungsgemäß eingesetzte Schutzmaterialien auf Basis von Polyethylen mit ultrahohem Molekulargewicht (UHMW-PE) als die Maschenware ausbildendes Material und zum anderen Materialien auf Basis von Para-Aramid als die Maschenware ausbildendes Material (Vergleich) untersucht werden. Die diesbezüglichen eingesetzten Garne weisen für sämtliche untersuchte Splitterschutzelemente einen Titer von etwa 220 dtex auf. Die den Schutzmaterialien bzw. Materialien zugrundeliegenden textilen Maschenwaren weisen zudem ein Flächengewicht von jeweils etwa 290 g/m² auf (pro Lage der textilen Maschenware).

In diesem Zusammenhang werden folgende Untersuchungen durchgeführt:
a) In einem ersten Untersuchungskomplex werden die V₅₀-Werte von Splitterschutzelementen auf Basis von UHMW-PE einerseits und Para-Aramid andererseits in Abhängigkeit von der für die jeweiligen Materialien verwendeten Lagenzahl der textilen Maschenware bestimmt. Für das Material auf Basis von UHMW-PE ergeben sich V₅₀-Werte von mehr als 320 m/s für das einlagige Material, von mehr als 400 m/s für das zweilagige Material und von mehr als 520 m/s für das fünflagige Material. Für das Material auf Basis von Para-Aramid ergeben sich entsprechend verschlechterte V₅₀-Werte von mehr als 170 m/s für das einlagige Material, von mehr als 210 m/s für das zweilagige Material und von mehr als 390 m/s für das fünflagige Material.
b) In einem zweiten Untersuchungskomplex werden an zweilagigen Splitterschutzelementen auf Basis von UHMW-PE einerseits und Para-Aramid andererseits die entsprechenden V₅₀-Werte nach UV-Bestrahlung der jeweiligen Materialien (nach einer Bestrahlungsdauer von einer Woche) bestimmt. Für das Material auf Basis von UHMW-PE resultiert ein V₅₀-Wert von mehr als 380 m/s. Das Material auf Basis von Para-Aramid weist einen V₅₀-Wert von mehr als 120 m/s.
c) In einem weiteren Untersuchungskomplex werden schließlich die entsprechenden V₅₀-Werte für zweilagige Materialien auf Basis von UHMW-PE einerseits und Para-Aramid andererseits nach einer Wärmebehandlung bei einer Temperatur von 70 °C (Behandlungsdauer = 24 h) bestimmt. Für das Material auf Basis von UHMW-PE resultiert ein V₅₀-Wert von mehr als 395 m/s. Das Material auf Basis von Para-Aramid weist einen V₅₀-Wert von mehr als 200 m/s.

Die Ergebnisse zeigen, dass für die erfindungsgemäß verwendeten Schutzmaterialien auf Basis von UHMW-PE insgesamt signifikant höhere V₅₀-Werte im Vergleich zu den untersuchten Materialien auf Basis von Para-Aramid erhalten werden. Darüber hinaus zeigt sich, dass die erfindungsgemäß verwendeten Schutzmaterialien auf Basis von UHMW-PE auch nach entsprechender Behandlung (UV-Bestrahlung sowie Wärmebehandlung) signifikant bessere ballistische Schutzeigenschaften im Vergleich zu den Materialien auf Basis von Para-Aramid aufweisen. Bei den Materialien auf Basis von UHMW-PE treten im Vergleich zu den unbehandelten Materialien zudem nur sehr geringe Änderungen der V₅₀-Werte auf, was die Beständigkeit der Materialien veranschaulicht.

Die Untersuchungen zeigen im Ergebnis die verbesserten Eigenschaften von Schutzmaterialien auf Basis von UHMW-PE. Insbesondere zeigen die Untersuchungen, dass das den Schutzmaterialien zugrundeliegende Material auf Basis von UHMW-PE UV-beständig, feuchtigkeitsresistent und zudem auch wärmebeständig ist, so dass auch unter extremen Bedingungen die ballistische Schutzfunktion derartiger Materialien nicht nachhaltig verringert wird.

Die Ergebnisse zeigen somit insgesamt die deutlich überlegenen Eigenschaften der erfindungsgemäß eingesetzten Schutzmaterialien auf Basis von UHMW-PE im Vergleich zu Systemen auf Basis von Para-Aramid.
2. In einem weiteren Untersuchungsabschnitt wird der Einfluss von Bindungselementen in dem textilen Maschenmaterial, welches zur Ausbildung der erfindungsgemäß eingesetzten Schutzmaterialien verwendet wird, untersucht, wobei diesbezüglich einlagige Materialien auf Basis von UHMW-PE herangezogen werden und wobei die Bindungselemente zum einen e) in Form von Flottungen und zum anderen f) in Form von Henkeln in dem Material vorliegen. Zur Bestimmung der ballistischen Schutzfunktion werden die entsprechenden Ballistikschutzwerte V₅₀, gemessen nach STANAG 2920 (RCC 0,13 g), bestimmt. Für Bindungselemente in Form von Flottungen ergibt sich ein V₅₀-Wert von mehr als 380 m/s, und für Bindungselemente in Form von Henkeln wird ein V₅₀-Wert von mehr als 350 m/s ermittelt.
   Die obigen Ergebnisse veranschaulichen, dass die Verwendung von speziellen textilen Maschenwaren zur Ausbildung der Schutzmaterialien mit der zusätzlichen Verwendung von Flottungen bzw. Henkeln als Bindungselemente zur einer signifikanten Erhöhung der ballistischen Schutzeigenschaften führt, einhergehend mit entsprechend vergrößerten V₅₀-Werten. Dabei werden besonders gute Ergebnisse erreicht, wenn die Bindungselemente in Form von Flottungen vorliegen.
3. Zudem wird die Flammfestigkeit eines erfindungsgemäß verwendeten Schutzmaterials ermittelt.
   Gemäß einer ersten Testserie wird ein erfindungsgemäß verwendetes Schutzmaterial auf Basis von UHMW-PE, auf welchem eine textile Abdeckschicht auf Basis eines feuerbeständigen Materials aufgebracht ist, einer Flammfestigkeitsuntersuchung unterzogen, wobei diesbezüglich nach der DIN EN ISO 15025: 2002 verfahren wird. Dabei weist der zugrundeliegende Lagenaufbau aus Splitterschutz einerseits und Abdeckmaterial andererseits eine hohe Hitze- bzw. Flammbeständigkeit auch nach 10 Sekunden Direktbeflammung auf. Das UHMW-PE-Material zeigt dabei lediglich eine leichte oberflächliche Verfärbung. Es liegt kein Schmelzen, kein Tropfen, keine Lochbildung oder Brennen des Materials vor.
   In einer zweiten Testserie wird ein einlagiges Material auf Flammbeständigkeit untersucht, wobei diesbezüglich eine textile Maschenware eingesetzt wird, welche auf einer Seite bzw. auf einer (Haupt-)Fläche vorrangig ein Garnsystem auf Basis von UHMW-PE aufweist, während auf der dieser Seite gegenüberliegenden (Haupt-)Fläche ein Garn bzw. eine Faserart auf Basis eines Meta-Aramids eingesetzt ist. Das entsprechende Material kann insbesondere auf einer Rundstrickmaschine hergestellt sein. Vor durchgeführter Beflammung gemäß der oben angeführten Norm weist das zugrundeliegende Material einen V₅₀-Wert von etwa 290 m/s auf. Nach durchgeführter Beflammung der (Haupt-)Fläche des Materials, welche vorrangig das Meta-Aramid aufweist, kann ein V₅₀-Wert von 275 m/s ermittelt werden. Somit weist das Material eine gute Flammbeständigkeit bei gleichzeitig hoher ballistischer Schutzfunktion auf.

Die angeführten Untersuchungen belegen insgesamt, dass auf Basis der erfindungsgemäßen Verwendung spezieller Materialien mit einer textilen Maschenware, welche ein Polyethylen mit ultrahohem Molekulargewicht enthält bzw. hieraus gebildet ist, besonders gute ballistische Schutzeigenschaften der damit hergestellten Schutzmaterialien resultieren, wobei diesbezüglich auch eine hohe Beständigkeit der eingesetzten Materialien vorliegt.

### Bezugszeichenliste:

- 1: Schutzmaterial
- 2: Gegenstand / Objekt
- 3: Textilmaterial in Form einer Maschenware des Schutzmaterials
- 3': Textilmaterial des Splitterschutzelements
- 3a: Maschen
- 3b: Bindungselement
- 3c: Kettfaden
- 3d: Schussfaden
- 4: Abdeckmaterial bzw. Abdeckschicht des Schutzmaterials
- 4': Abdeckmaterial bzw. Abdeckschicht des Splitterschutzelements
- 5: Splitterschutzelement
- 6: Aufnahmevorrichtung
- 7: Schutzmaterialeinheit

## Patentansprüche

1. Textiles ballistisches Schutzmaterial (1) mit Splitter-, Stich-, Schnitt-, Schuss- und/oder Stoßschutzfunktion zum Schutz und/oder zur Abdeckung oder Bedeckung und/oder zur Auskleidung von Gegenständen (2),
wobei das Schutzmaterial (1) als flächiges und/oder zweidimensionales Textilmaterial (3) in Form eines großflächigen zusammenhängenden, insbesondere einstückigen textilen Flächengebildes, bevorzugt in Form einer Abdeckung, eines Tuches, eines Lakens, einer Decke, einer Plane, einer Matte oder dergleichen, ausgebildet ist,
wobei das Textilmaterial (3) als textile Maschenware ausgebildet ist und/oder vorliegt, wobei die Maschenware eine Vielzahl von Maschen (3a) einerseits und eine Vielzahl mindestens eines hiervon verschiedenen Bindungselements (3b) andererseits aufweist, wobei das Bindungselement (3b) ausgewählt ist aus der Gruppe von Henkel, Flottung, Schuss, Teilschuss und Stehfaden, und
wobei das Textilmaterial (3) aus mindestens einem Polyethylen mit ultrahohem Molekulargewicht (*Ultra High Molecular Weight Polyethylene* bzw. UHMW-PE) besteht, wobei das Polyethylen mit ultrahohem Molekulargewicht (UHMW-PE) als Garn und/oder Zwirn und/oder Faden, vorzugsweise Filamentgarn, vorliegt und zur Ausbildung und/oder als Bestandteil des Schutzmaterials (1) dient und/oder eingesetzt ist.

2. Schutzmaterial nach Anspruch 1,
wobei der Gegenstand (2) eine definierte physische Ausdehnung und/oder eine definierte Formgebung aufweist und/oder
wobei der Gegenstand (2) ein technischer Gegenstand ist und/oder wobei der Gegenstand (2) ein mechanischer und/oder elektronischer Gegenstand ist und/oder
wobei der Gegenstand (2) ein ziviler oder militärischer Gegenstand, insbesondere militärischer Gegenstand, vorzugsweise ein technisch-militärischer, mechanischmilitärischer und/oder elektronisch-militärischer Gegenstand, ist und/oder wobei der Gegenstand (2) ausgewählt ist aus der Gruppe von militärischen Gegenständen und militärischen Gerätschaften, vorzugsweise aus der Gruppe von militärischen Ausrüstungsgegenständen und/oder militärischen Gerätschaften, und/oder wobei der Gegenstand (2) ausgewählt ist aus der Gruppe von vorzugsweise militärischen Fahrzeugen, Maschinen, Waffen, Munition, Ersatzteilen, Elektronikgegenständen, Zubehörgegenständen, Anlagen, Einrichtungen, Ausrüstungen oder dergleichen, und/oder
wobei das Schutzmaterial (1) der physischen Ausdehnung und/oder der Formgebung des Gegenstands (2) angepasst ist und/oder
und/oder wobei das Schutzmaterial (1) nicht als Bekleidungsstück für Personen ausgebildet ist.

3. Schutzmaterial nach Anspruch 1 oder 2, wobei das Schutzmaterial (1) insbesondere im Einsatz- und oder Anwendungszustand außenseitig auf dem Gegenstand (2) angeordnet ist und/oder wobei das Schutzmaterial (1) insbesondere im Einsatz- und oder Anwendungszustand den Gegenstand (2) teilweise oder zumindest im Wesentlichen vollständig, vorzugsweise vollständig, abdeckt und/oder bedeckt und/oder wobei das Schutzmaterial (1) reversibel und/oder nicht dauerhaft (nicht permanent), vorzugsweise abnehmbar, mit dem Gegenstand (2) verbunden ist.

4. Schutzmaterial nach einem der vorangehenden Ansprüche, wobei das Schutzmaterial (1) in den Gegenstand (2) integriert ist und/oder wobei das Schutzmaterial eine Auskleidung des Gegenstands (2) bildet und/oder wobei das Schutzmaterial (1) ein Bestandteil des Gegenstands (2) ist und/oder wobei das Schutzmaterial (1) und der Gegenstand (2) eine Einheit ausbilden und/oder wobei das Schutzmaterial (1) insbesondere fest und/oder dauerhaft (permanent) mit dem Gegenstand (2) verbunden, insbesondere vernäht, verschweißt, laminiert und/oder verklebt, ist und/oder wobei das Schutzmaterial (1) zumindest im Wesentlichen vollflächig mit dem Gegenstand (2) verbunden ist und/oder wobei das Schutzmaterial (1) zumindest abschnittsweise, insbesondere punktuell, linienförmig und/oder rasterförmig, mit dem Gegenstand (2) verbunden ist.

5. Schutzmaterial nach einem der vorangehenden Ansprüche, wobei das Schutzmaterial (1) einen Splitter- und/oder Ballistikschutzwert V₅₀, bestimmt gemäß STANAG 2920, von mindestens 180 m/s, insbesondere mindestens 200 m/s, vorzugsweise mindestens 225 m/s, bevorzugt mindestens 250 m/s, besonders bevorzugt mindestens 275 m/s, ganz besonders bevorzug mindestens 300 m/s, weiter bevorzugt mindestens 325 m/s, noch weiter bevorzugt mindestens 350 m/s, aufweist.

6. Schutzmaterial nach einem der vorangehenden Ansprüche, wobei das Schutzmaterial (1) einen Splitter- und/oder Ballistikschutzwert V₅₀, bestimmt gemäß STANAG 2920, im Bereich von 180 m/s bis 800 m/s, insbesondere 200 m/s bis 750 m/s, vorzugsweise 225 m/s bis 700 m/s, bevorzugt 250 m/s bis 650 m/s, besonders bevorzugt 275 m/s bis 600 m/s, ganz besonders bevorzugt 300 m/s bis 550 m/s, noch weiter bevorzugt 325 m/s bis 525 m/s, wiederum weiter bevorzugt 350 m/s bis 525 m/s, aufweist.

7. Schutzmaterial nach einem der vorangehenden Ansprüche, wobei das Schutzmaterial (1) als Gewirke oder Gestricke, vorzugsweise als Gestricke, ausgebildet ist und/oder vorliegt.

8. Schutzmaterial nach einem der vorangehenden Ansprüche, wobei das Bindungselement (3b) ausgewählt ist aus der Gruppe von Henkel und Flottung (Flottierung) und/oder wobei das Bindungselement (3b) in Form eines Henkels und/oder einer Flottung (Flottierung) ausgebildet ist.

9. Schutzmaterial nach einem der vorangehenden Ansprüche, wobei das Schutzmaterial (1) als textile Maschenware, insbesondere als Gewirke oder Gestricke, vorzugsweise als Gestricke, ausgebildet ist und/oder vorliegt, wobei die Maschenware (3) eine Grundlegung, ausgewählt aus der Gruppe von Franse, Trikot, Tuch, Satin, Samt und Atlas, aufweist und/oder wobei die Maschenware (3) eine RECHTS/LINKS (RL)-, RECHTS/RECHTS (RR)- oder LINKS/LINKS (LL)-Maschenbindung aufweist.

10. Schutzmaterial nach einem der vorangehenden Ansprüche, wobei das Schutzmaterial (1) als textile Maschenware in Form eines Gewirkes, insbesondere Kettenwirkware und/oder Kulierwirkware, vorzugsweise Kettenwirkware, ausgebildet ist und/oder vorliegt.

11. Verwendung mindestens eines textilen Schutzmaterials, wie in einem der vorangehenden Ansprüche definiert, zur Bereitstellung und/oder Erhöhung eines Splitter-, Stich-, Schnitt-, Schuss- und/oder Stoßschutzes von Gegenständen und/oder zur Ausrüstung von Gegenständen mit einem Splitter-, Stich-, Schnitt-, Schuss- und/oder Stoßschutz, vorzugsweise zum Schutz und/oder zur Abdeckung oder Bedeckung und/oder Auskleidung von Gegenständen.

12. Verwendung nach Anspruch 11,
zur Bereitstellung und/oder Ausrüstung und/oder Erhöhung einer Schutzfunktion von Gegenständen und/oder des Schutzes von Gegenständen und/oder
zur Bereitstellung und/oder Ausrüstung und/oder Erhöhung einer Schutzfunktion gegenüber durch Detonation und/oder Explosion hervorgerufenen und/oder freigesetzten Splittern.

13. Verwendung nach Anspruch 11 oder 12, wobei das Schutzmaterial zwischen dem Gegenstand einerseits und dem Detonations- und/oder Explosionsort angeordnet wird und/oder wobei das Schutzmaterial im Anwendungszustand sich über den Gegenstand erstreckt und/oder den Gegenstand zumindest teilweise bedeckt und/oder den Gegenstand zumindest teilweise auskleidet.

14. Verfahren zur Bereitstellung und/oder Erhöhung eines Splitter-, Stich-, Schnitt-, Schuss- und/oder Stoßschutzes von mindestens einem Gegenstands und/oder zur Ausrüstung mindestens eines Gegenstands mit einem Splitter-, Stich-, Schnitt-, Schuss- und/oder Stoßschutz, wobei mindestens ein Schutzmaterial, wie in einem der Ansprüche 1 bis 10 definiert, zwischen dem Gegenstand einerseits und dem Detonations- und/oder Explosionsort angeordnet wird und/oder wobei das Schutzmaterial im Anwendungszustand sich über den Gegenstand erstreckend und/oder den Gegenstand zumindest teilweise bedeckend und/oder den Gegenstand zumindest teilweise auskleidend angeordnet wird.

15. Schutzmaterialeinheit (7), wobei die Schutzmaterialeinheit (7) mindestens ein Schutzmaterial (1), wie in einem der Ansprüche 1 bis 10 definiert, und mindestens einen mit dem Schutzmaterial (1) ausgerüsteten und/oder mit dem Schutzmaterial (1) zumindest teilweise bedeckten Gegenstand (1) und/oder mit dem Schutzmaterial (1) zumindest teilweise ausgekleideten Gegenstand (1) umfasst.

## Claims

1. A textile ballistic protective material (1) having a protection function against fragments, stabbing, cutting, firearms and/or shocks for protecting and/or for covering or concealing and/or for lining articles (2),
wherein the protective material (1) is configured as a planar and/or two-dimensional textile material (3) in the form of a large-area continuous, in particular one-piece textile fabric, preferably in the form of a cover, of a cloth, of a sheet, of a blanket, of a tarpaulin, of a mat or the like,
wherein the textile material (3) is configured and/or exists as a textile knitted fabric, wherein the knitted fabric has a plurality of stitches (3a) on the one hand and a plurality of at least one binding element (3b) different therefrom on the other hand, wherein the binding element (3b) is selected from the group of tuck loop, float stitch, weft, partial weft and standing thread, and
wherein the textile material (3) consists of at least one *ultra-high-molecular-weight polyethylene* (UHMW-PE), wherein the ultrahigh-molecular-weight polyethylene (UHMW-PE) is in the form of yarn and/or twine and/or thread, preferably filament yarn, and serves and/or is used to form the protective material (1) and/or as a constituent part thereof.

2. The protective material according to claim 1,
wherein the article (2) has a defined physical extension and/or a defined shape, and/or
wherein the article (2) is a technical article and/or wherein the article (2) is a mechanical and/or electronic article, and/or
wherein the article (2) is a civilian or military article, in particular a military article, preferably military technical article, military mechanical article and/or military electronic article, and/or
wherein the article (2) is selected from the group of military articles and military tools, preferably from the group of military pieces of equipment and/or military tools, and/or wherein the article (2) is selected from the group of preferably military vehicles, machines, weapons, ammunition, spare parts, electronic articles, accessories, installations, facilities, equipment or the like, and/or
wherein the protective material (1) is adapted to the physical extension and/or the shape of the article (2), and/or
wherein the protective material (1) is not configured as an item of clothing for people.

3. The protective material according to claim 1 or 2, wherein the protective material (1) in particular in the used and/or applied state thereof is arranged on the outside of the article (2), and/or wherein the protective material (1) in particular in the used and/or applied state covers and/or conceals the article (2) partially or at least substantially completely, preferably completely, and/or wherein the protective material (1) is connected to the article (2) reversibly and/or non-durably (non-permanently), preferably detachably.

4. The protective material according to any one of the preceding claims, wherein the protective material (1) is integrated into the article (2), and/or wherein the protective material forms a lining of the article (2), and/or wherein the protective material (1) is a constituent part of the article (2), and/or wherein the protective material (1) and/or the article (2) form a unit, and/or wherein the protective material (1) in particular is fixedly and/or durably (permanently) connected, in particular sewn, welded, laminated and/or adhesively bonded to the article (2), and/or wherein the protective material (1) is connected to the article (2) at least substantially over the entire area thereof, and/or wherein the protective material (1) is connected to the article (2) at least in some sections, in particular at points, in lines and/or in a grid-like manner.

5. The protective material according to any one of the preceding claims, wherein the protective material (1) has a fragment and/or ballistic protection value V₅₀, determined according to STANAG 2920, of at least 180 m/s, in particular at least 200 m/s, preferably at least 225 m/s, more preferably at least 250 m/s, particularly preferably at least 275 m/s, very particularly preferably at least 300 m/s, further preferably at least 325 m/s, even further preferably at least 350 m/s.

6. The protective material according to any one of the preceding claims, wherein the protective material (1) has a fragment and/or ballistic protection value V₅₀, determined according to STANAG 2920, of 180 m/s to 800 m/s, in particular 200 m/s to 750 m/s, preferably 225 m/s to 700 m/s, more preferably 250 m/s to 650 m/s, particularly preferably 275 m/s to 600 m/s, very particularly preferably 300 m/s to 550 m/s, even further preferably at least 325 m/s to 525 m/s, yet even further preferably 350 m/s to 525 m/s.

7. The protective material according to any one of the preceding claims, wherein the protective material (1) is configured and/or exists as fabrics knitted using needles movable jointly or as fabrics knitted using needles movable individually, preferably as fabrics knitted using needles movable individually.

8. The protective material according to any one of the preceding claims, wherein the binding element (3b) is selected from the group of tuck loop and float stitch, and/or wherein the binding element (3b) is configured in the form of a tuck loop and/or a float stitch.

9. The protective material according to any one of the preceding claims, wherein the protective material (1) is configured and/or exists as a textile knitted fabric, in particular as fabrics knitted using needles movable jointly or as fabrics knitted using needles movable individually, preferably as fabrics knitted using needles movable individually, wherein the knitted fabric (3) has a basic weave selected from the group of fringe, tricot, linen, satin and velvet, and/or wherein the knitted fabric (3) has a plain (RIGHT/LEFT (RL)), rib (RIGHT/RIGHT (RR)) or purl (LEFT/LEFT (LL)) stitch.

10. The protective material according to any one of the preceding claims, wherein the protective material (1) is configured and/or exists as a textile knitted fabric in the form of a fabric knitted using needles movable jointly, in particular a warp-knitted fabric and/or weft-knitted fabric, preferably a warp-knitted fabric.

11. Use of at least one textile protective material, as defined in one of the preceding claims, for providing and/or increasing protection against fragments, stabbing, cutting, firearms and/or shocks for articles and/or for equipping articles with protection against fragments, stabbing, cutting, firearms and/or shocks, preferably for protecting and/or for covering or concealing and/or for lining articles.

12. The use according to claim 11,
for providing and/or equipping with and/or increasing a protective function for articles and/or for protecting articles, and/or
for providing and/or equipping with and/or increasing a protective function in respect of fragments resulting from and/or released by detonation and/or explosion.

13. The use according to claim 11 or 12, wherein the protective material is arranged between the article and the site of detonation and/or explosion, and/or wherein the protective material in the applied state extends across the article and/or at least partly conceals the article and/or at least partly lines the article.

14. A method for providing and/or increasing protection against fragments, stabbing, cutting, firearms and/or shocks for at least one article and/or for equipping at least one article with protection against fragments, stabbing, cutting, firearms and/or shocks, wherein at least one protective material as defined in one of claims 1 to 10 is arranged between the article, on the one hand, and the site of detonation and/or explosion, and/or wherein the protective material in the applied state is arranged so as to extend across the article and/or at least partly conceal the article and/or at least partly line the article.

15. A protective material unit (7), wherein the protective material unit (7) comprises at least one protective material (1) as defined in one of claims 1 to 10, and at least one article (1) equipped with the protective material (1) and/or at least partly covered with the protective material (1) and/or at least one article (1) at least partly lined with the protective material (1).

## Revendications

1. Matériau de protection textile balistique (1) à fonction de protection contre les éclats, les perforations, les entailles, les tirs et/ou les chocs, destiné à protéger et/ou à couvrir ou recouvrir et/ou à revêtir des objets (2),
le matériau de protection (1) étant conçu comme un matériau textile (3) bidimensionnel et/ou plat sous la forme d'une surface textile en particulier d'un seul tenant, rattachée sur une grande surface, de préférence sous la forme d'un revêtement, d'une toile, d'un drap, d'une couverture, d'une bâche, d'un tapis ou similaire,
le matériau textile (3) étant conçu et/ou se présentant sous la forme d'un tricot à mailles, le tricot à mailles présentant d'une part une pluralité de mailles (3a) et d'autre part une pluralité d'au moins un élément de liaison (3b) différent de celles-ci, l'élément de liaison (3b) étant sélectionné dans le groupe de maille chargée, maille flottée, trame, trame partielle et fil fixe et
le matériau textile (3) étant constitué d'au moins un polyéthylène de masse moléculaire très élevée *(Ultra High Molecular Weight Polyethylene* ou PEhpm), le polyéthylène de masse moléculaire très élevée (PEhpm) se présentant sous la forme de fil et/ou de fil retors et/ou de brin, de préférence fil continu et destiné à former et/ou servant et/ou faisant partie du matériau de protection (1).

2. Matériau de protection selon la revendication 1,
l'objet (2) présentant un allongement physique défini et/ou une mise en forme définie et/ou
l'objet (2) étant un objet technique et/ou l'objet (2) étant un objet électronique et/ou mécanique et/ou
l'objet (2) étant un objet civil ou militaire, en particulier un objet militaire, de préférence un objet technique militaire, mécanique militaire et/ou électronique militaire et/ou
l'objet (2) étant sélectionné dans le groupe d'objets militaires et de matériel militaire, de préférence dans le groupe d'objets d'équipement militaires et/ou de matériels militaires et/ou l'objet (2) étant sélectionné dans le groupe de préférence de véhicules, de machines, d'armes, de munition, de pièces de rechange, d'objets électroniques, d'accessoires, d'installations, de dispositifs, d'équipements militaires ou similaires et/ou le matériau de protection (1) étant adapté à l'allongement physique et/ou la mise en forme de l'objet (2) et/ou
et/ou le matériau de protection (1) étant conçu en tant que pièce de vêtement pour les personnes.

3. Matériau de protection selon la revendication 1 ou 2, le matériau de protection (1) étant disposé sur la face extérieure de l'objet (2) notamment lorsqu'il est utilisé et/ou employé et/ou le matériau de protection (1) couvrant et/ou recouvrant à certains endroits ou au moins sensiblement totalement, de préférence totalement l'objet (2) lorsqu'il est utilisé et/ou employé et/ou le matériau de protection (1) étant relié à l'objet (2), de préférence de manière amovible, réversible et/ou non permanente (non constante).

4. Matériau de protection selon l'une quelconque des revendications précédentes, le matériau de protection (1) étant intégré dans l'objet (2) et/ou le matériau de protection formant un revêtement de l'objet (2) et/ou le matériau de protection (1) faisant partie de l'objet (2) et/ou le matériau de protection (1) et l'objet (2) formant une unité et/ou le matériau de protection (1) étant relié en particulier à demeure et/ou en permanence (constamment) à l'objet (2), en particulier étant cousu, soudé, stratifié et/ou collé et/ou le matériau de protection (1) étant relié au moins sensiblement sur toute la surface à l'objet (2) et/ou le matériau de protection (1) étant relié au moins à certains endroits, en particulier sous forme de points, de lignes et/ou de grillage, à l'objet (2).

5. Matériau de protection selon l'une quelconque des revendications précédentes, le matériau de protection (1) présentant une valeur de protection balistique et/ou contre les éclats V₅₀, définie selon STANAG 2920, d'au moins 180 m/s, en particulier d'au moins 200 m/s, de préférence d'au moins 225 m/s, préférentiellement d'au moins 250 m/s, de préférence encore d'au moins 275 m/s, mieux encore d'au moins 300 m/s, plus préférentiellement encore d'au moins 325 m/s, idéalement d'au moins 350 m/s.

6. Matériau de protection selon l'une quelconque des revendications précédentes, le matériau de protection (1) présentant une valeur de protection balistique et/ou contre les éclats V₅₀, définie selon STANAG 2920, comprise dans la plage entre 180 m/s et 800 m/s, en particulier entre 200 m/s et 750 m/s, de préférence entre 225 m/s et 700 m/s, préférentiellement entre 250 m/s et 650 m/s, de préférence encore entre 275 m/s et 600 m/s, plus préférentiellement entre 300 m/s et 550 m/s, mieux encore entre 325 m/s et 525 m/s, idéalement entre 350 m/s et 525 m/s.

7. Matériau de protection selon l'une quelconque des revendications précédentes, le matériau de protection (1) étant conçu et/ou se présentant sous la forme de tissu à mailles ou tricot, de préférence sous forme de tricot.

8. Matériau de protection selon l'une quelconque des revendications précédentes, l'élément de liaison (3b) étant sélectionné dans le groupe de maille chargée et maille flottée (fil flottant) et/ou l'élément de liaison (3b) étant conçu sous la forme d'une maille chargée et/ou une maille flottée (fil flottant).

9. Matériau de protection selon l'une quelconque des revendications précédentes, le matériau de protection (1) étant conçu et/ou se présentant sous la forme de tissu à mailles ou de tricot, en particulier sous la forme de tricot, de préférence de tricot, le tricot à mailles (3) présentant une fondation, sélectionnée dans le groupe de frange, tricot, drap, satin, velours, atlas et/ou le tricot à mailles (3) présentant une liaison par mailles DROITE/GAUCHE (DG)-, DROITE/DROITE (DD) ou GAUCHE/GAUCHE (GG).

10. Matériau de protection selon l'une quelconque des revendications précédentes, le matériau de protection (1) étant conçu et/ou se présentant sous la forme d'un tissu à mailles, en particulier sous la forme de tricot à mailles jetées et/ou de tricot à mailles cueillies, de préférence de tricot à mailles jetées.

11. Utilisation d'au moins un matériau de protection textile, tel que défini dans l'une quelconque des revendications précédentes, destiné à produire et/ou à augmenter la protection contre les éclats, les perforations, les entailles, les tirs et/ou les chocs d'objets et/ou à équiper des objets d'une protection contre les éclats, les perforations, les entailles, les tirs et/ou les chocs, de préférence destiné à couvrir ou recouvrir et/ou revêtir des objets.

12. Utilisation selon la revendication 11,
pour la production et/ou l'équipement et/ou l'augmentation d'une fonction de protection d'objets et/ou d'une protection d'objets et/ou
pour la production et/ou l'équipement et/ou l'augmentation d'une fonction de protection contre les éclats libérés et/ou provoqués par une détonation et/ou une explosion.

13. Utilisation selon la revendication 11 ou 12, le matériau de protection étant disposé entre l'objet d'une part et le lieu d'explosion et/ou de dénotation et/ou le matériau de protection s'étendant sur l'objet lorsqu'il est utilisé et/ou recouvrant au moins à certains endroits l'objet et/ou revêtant l'objet au moins à certains endroits.

14. Procédé de production et/ou d'augmentation d'une protection contre les éclats, les perforations, les entailles, les tirs et/ou les chocs d'au moins un objet et/ou destiné à équiper au moins un objet d'une protection contre les éclats, les perforations, les entailles, les tirs et/ou les chocs, au moins un matériau de protection, tel que défini dans l'une des revendications 1 à 10, étant disposé entre l'objet d'une part et le lieu d'explosion et/ou de détonation et/ou le matériau de protection s'étendant sur l'objet lorsqu'il est utilisé et/ou recouvrant l'objet au moins à certains endroits et/ou revêtant l'objet au moins à certains endroits.

15. Unité de matériau de protection (7), l'unité de matériau de protection (7) comprenant au moins un matériau de protection (1), tel que défini dans l'une des revendications 1 à 10 et au moins un objet (1) équipé d'au moins un matériau de protection (1) et/ou recouvert au moins à certains endroits du matériau de protection (1) et/ou un objet (1) revêtu au moins à certains endroits du matériau de protection (1).
